# EUROPEAN PATENT APPLICATION

(11) **EP 4 764 818 A1**
(43) Date of publication of application: **24.06.2026**
(21) Application number: 25222384.7
(22) Date of filing: 10.12.2025
(51) Int. Cl.: G06F 3/16, G06F 3/048

(54) **DYNAMIC MICROPHONE POINTER INTERFACE FOR CONTEXTUAL VOICE COMMANDS**

(30) Priority: 20.12.2024 US 202418990471
(71) Applicant: Microsoft Technology Licensing, LLC, Redmond, WA 98052 (US)
(72) Inventor: ACHUMBA, TIMOTHY CHINEDUM, Redmond, 98052 (US)
(74) Representative: CMS Cameron McKenna Nabarro Olswang LLP

(57) **Abstract**

The disclosed techniques provide a dynamic microphone pointer interface for generating contextual voice commands. A system provides an input that combines a voice input and a physical input gesture. In some embodiments, a system displays a UI with a movable microphone icon. The microphone icon can be moved by the physical input gesture to a region associated with a specific data object, such as a meeting, email, or file. While the microphone icon is indicating the selection of the region, the system can combine the voice input with that data object to complete tasks. This combination provides a technical improvement over a system that only receives a user's voice command by deriving context from the physical input gesture and combining that context with the user's voice command. This provides accurate and efficient input method that mitigates the need for repeated attempts to have a computer execute desired functions.

## Description

### BACKGROUND

There is a growing trend for computing systems to use voice assistants. A user can provide a voice input command and in response, a computer can perform specific functions. For example, a user can provide a voice input instruction for a computer to "turn up the volume" or "dim the screen," "set an alarm," etc.

Although there are a number of different types of devices that can invoke specific functions in response to a voice input, this technology has a number of drawbacks. For example, some traditional voice assistants struggle when commands are too general. In this situation, a user may have to add more context or go through a number of additional steps to make themselves understood, and to have a computer execute desired tasks. For illustrative purposes, consider a user scenario where a user provides a voice input of, "send an attachment." This broad statement is not specific enough for a computer to select the right file, without further clarification. This leads to a prolonged input process and a number of failed interactions and can cause the generation of errors and inefficiencies. Among many other inefficiencies, existing voice assistants may lead to a number of repeated attempts which can take additional time and computing resources to complete a desired task. A number of computing resources, including processing resources, memory resources, and networking resources may be utilized in each failed attempt. In some instances, using today's systems, a user may make a number of failed attempts to provide voice instructions to a computer and ultimately have to resort to a manual input to have a computer perform the desired tasks.

### SUMMARY

The disclosed techniques provide a dynamic microphone pointer interface for generating contextual voice commands. A system provides an input that combines a voice input and a physical input gesture. In some embodiments, a system displays a UI with a movable microphone icon. The microphone icon can be moved by the physical input gesture to a region associated with a specific set of functions and use that specific set of functions with a user's voice input to complete tasks. This combination provides a technical improvement over a system that only receives a user's voice command by deriving context from the physical input gesture and combining that context with the user's voice command. This combination provides a more contextually accurate and efficient input method that mitigates the need for repeated attempts trying to have a computer execute desired functions.

In some embodiments, the disclosed techniques provide a voice assistant feature that lets users interact directly with specific elements on a user interface (UI) by detaching the microphone button and using it as a pointer. This approach enhances the precision of voice commands, allowing users to point at icons, buttons, or text fields, and provide voice commands that are directly tied to those graphical elements. By combining the act of pointing and speaking, the system makes voice interactions more intuitive and context-aware, which ultimately leads to more efficient workflows. For example, in a messaging app, instead of saying "Reply to the last email," the user can simply point to a specific email or attachment and say "Reply" or "Send this file." This reduces ambiguity and speeds up the interaction, especially in scenarios where traditional voice commands would require extra steps to clarify intent. This solution is particularly useful in complex environments where voice commands alone can be inefficient or require additional context to complete an action.

In another illustrative example, consider another Scenario where a user is managing multiple emails with attachments in an email client. Instead of having to navigate through menus or issue a long command like "Send the second attachment in the last email," they could control the position of a graphical element. The graphical element can be in the form of a movable microphone icon that can be used to point at a specific email or specific attachment in an email. This would allow a user to point the graphical element to the exact attachment they have in mind, and say, "Send this." By doing so, the system instantly understands the user's intent, reducing the chance of errors and making the interaction much faster. The solution is implemented by combining enhanced voice recognition with pointer-based UI interaction. When the microphone button is detached from an anchoring position and used as a pointer, the system tracks the pointer's position on the screen and matches it with available UI elements. This creates a context where voice commands are directly linked to the UI component being pointed at. The system dynamically filters and narrows down relevant commands based on the selected UI element, ensuring precision.

The disclosed techniques provide a technical benefit by improving user interaction with a device. The combination of the voice input with the physical input gesture allows the system to generate contextual data that supplements the voice input to follow the user's intent. This reduces the amount of input and interaction with the computer that's needed. Also, user interaction with a device with a small screen is greatly Improved since devices with small screens only allow for certain types of gestures such as drag and drop another touch gestures.

The disclosed techniques provide context-aware interactions between a user and a computer. By linking voice commands directly to UI elements, it eliminates ambiguity and improves accuracy. A simplified input technique provides more accurate input data to a system by identifying exactly which element is being interacted with, making commands more intuitive and efficient. This also provides improved usability in complex applications. The system is particularly effective in complex applications where multiple commands are tied to different UI elements. It reduces the need to memorize complicated verbal commands or navigate through layers of menus. The disclosed techniques also provide a reduction in computational overhead. Because a system narrows down available commands based on the UI element being selected, the system reduces the load on the voice recognition engine, focusing only on relevant commands instead of processing a broad set of options. The disclosed techniques also provide scalability across applications. The solutions provided herein are highly adaptable, making it easy to integrate across a wide range of software environments, from productivity tools to creative applications, without significant changes to the underlying UI. The disclosed techniques also provide enhanced user efficiency. By combining pointer-based selection with voice commands, users can complete tasks faster and with fewer steps. This is especially valuable in professional environments where speed and precision are critical. In summary, the disclosed techniques transform voice assistant interactions by making them more efficient, context-aware, and precise. It reduces ambiguity and enhances overall user experience, particularly in complex, multi-element applications.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.
FIGURE 1A shows a first stage of our process for activating a movable microphone control element by directing a cursor over an activation control element.
FIGURE 1B shows a second stage of our process for activating a movable microphone control element by directing a cursor over an activation control element.
FIGURE 1C shows a third stage of our process for activating a movable microphone control element by directing a cursor over an activation control element.
FIGURE 1D shows a fourth stage of our process for activating a movable microphone control element by directing a cursor over an activation control element.
FIGURE 2A shows a first stage of a process for converting the display of an activation control element to a display of a movable microphone control element.
FIGURE 2B shows a second stage of a process for converting the display of an activation control element to a display of a movable microphone control element.
FIGURE 2C shows a third stage of a process for converting the display of an activation control element to a display of a movable microphone control element.
FIGURE 3A shows a first stage of a process where an input controls a position of a movable microphone control element toward a UI element representing a meeting.
FIGURE 3B shows a second stage of a process where an input controls a position of a movable microphone control element toward a UI element representing a meeting.
FIGURE 3C shows a third stage of a process where an input controls a position of a movable microphone control element toward a UI element representing a meeting.
FIGURE 3D shows a fourth stage of a process where an input controls a position of a movable microphone control element toward a UI element representing a meeting.
FIGURE 3E shows a fifth stage of a process where an input controls a position of a movable microphone control element, where the position of the moveable microphone control element indicates a selection of a meeting.
FIGURE 4A shows a first stage of a process for receiving a voice input while the moveable microphone control element indicates a selection of a meeting.
FIGURE 4B shows a second stage of a process for receiving a voice input while the moveable microphone control element indicates a selection of a meeting.
FIGURE 4C shows a third stage of a process for receiving a voice input while the moveable microphone control element indicates a selection of a meeting.
FIGURE 4D shows a fourth stage of a process for receiving a voice input while the moveable microphone control element indicates a selection of a meeting.
FIGURE 5A shows a process for generating an email object from a directed voice input, and a first stage of a UI transition to a display of an email draft having parameters generated from the directed voice input.
FIGURE 5B shows a second stage of a UI transition to a display of an email draft having parameters generated from the directed voice input.
FIGURE 5C shows a third stage of a UI transition to a display of an email draft having parameters generated from the directed voice input.
FIGURE 5D shows a fourth stage of a UI transition to a display of an email draft having parameters generated from the directed voice input.
FIGURE 5E shows a fifth stage of a UI transition to a display of an email draft having parameters generated from the directed voice input.
FIGURE 6A shows a first stage of a process where an input controls a position of a movable microphone control element toward a representation of a chat thread.
FIGURE 6B shows a second stage of a process where an input controls a position of a movable microphone control element toward a representation of a chat thread.
FIGURE 6C shows a third stage of a process where an input controls a position of a movable microphone control element toward a representation of a chat thread.
FIGURE 6D shows a fourth stage of a process where an input controls a position of a movable microphone control element, where the position of the moveable microphone control element indicates a selection of a chat thread.
FIGURE 7A shows a first stage of a process for receiving a voice input while the moveable microphone control element indicates a selection of a chat thread.
FIGURE 7B shows a second stage of a process for receiving a voice input while the moveable microphone control element indicates a selection of a chat thread.
FIGURE 8A shows a first stage of a UI transition to a display of a draft reply to a chat message having parameters generated from the directed voice input.
FIGURE 8B shows a second stage of a UI transition to a display of a draft reply to a chat message having parameters generated from the directed voice input.
FIGURE 8C shows a third stage of a UI transition to a display of a draft reply to a chat message having parameters generated from the directed voice input.
FIGURE 9A shows a first stage of a process where an input controls a position of a movable microphone control element toward a representation of an email attachment.
FIGURE 9B shows a second stage of a process where an input controls a position of a movable microphone control element, where the position of the moveable microphone control element indicates a selection of an email attachment.
FIGURE 10 shows a process for receiving a voice input while the moveable microphone control element indicates a selection of an email attachment.
FIGURE 11 shows a process for generating an email object from a directed voice input, and a display of an email draft having an email attachment and parameters generated from the directed voice input.
FIGURE 12A shows a position of a cursor configured to direct a voice input to functionality of an operating system.
FIGURE 12B shows a position of a cursor configured to direct a voice input to functionality of a first application function.
FIGURE 12C shows a position of a cursor configured to direct a voice input to functionality of a second application function.
FIGURE 12D shows a position of a cursor configured to direct a voice input to functionality of a third application function.
FIGURE 12E shows a position of a cursor configured to direct a voice input to functionality of a fourth application function.
FIGURE 12F shows how time divisions of an audio stream can be directed to certain software applications and operating system functions.
FIGURE 13 is a flow diagram showing aspects of a routine for implementing aspects of the disclosed techniques.
FIGURE 14 is a diagram illustrating a distributed computing environment capable of implementing aspects of the techniques and technologies presented herein.
FIGURE 15 is a computer architecture diagram illustrating a computing device architecture for a computing device capable of implementing aspects of the techniques and technologies presented herein.

### DETAILED DESCRIPTION

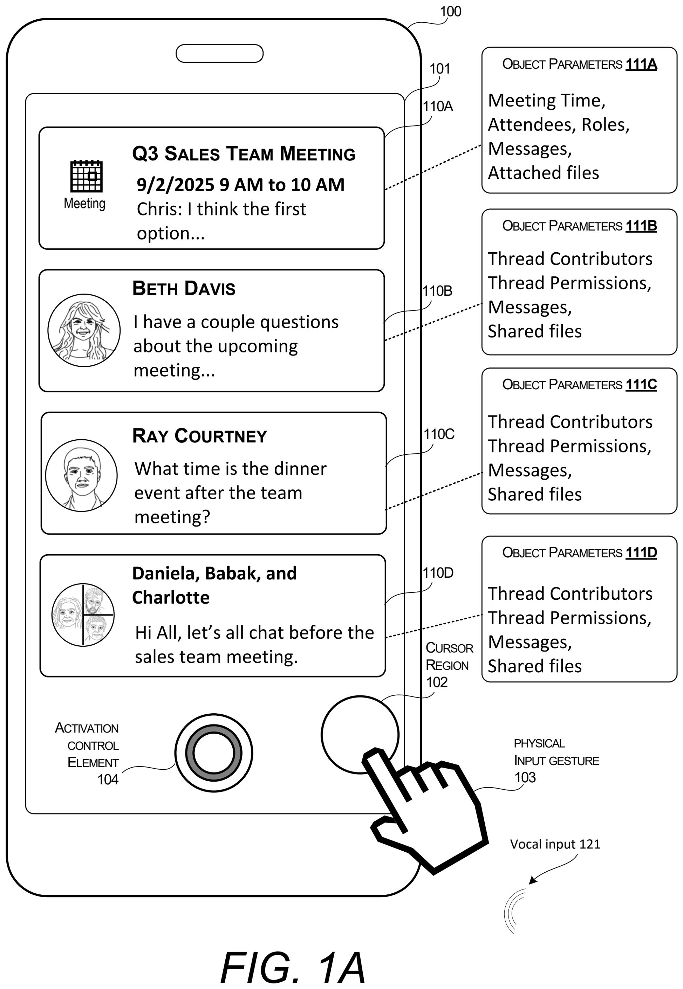

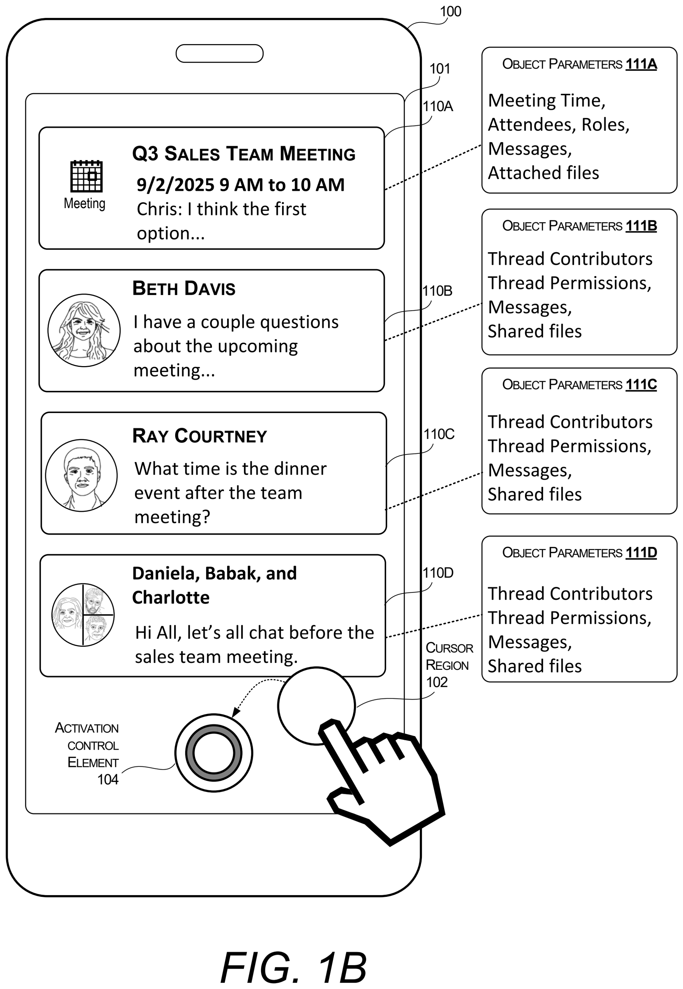

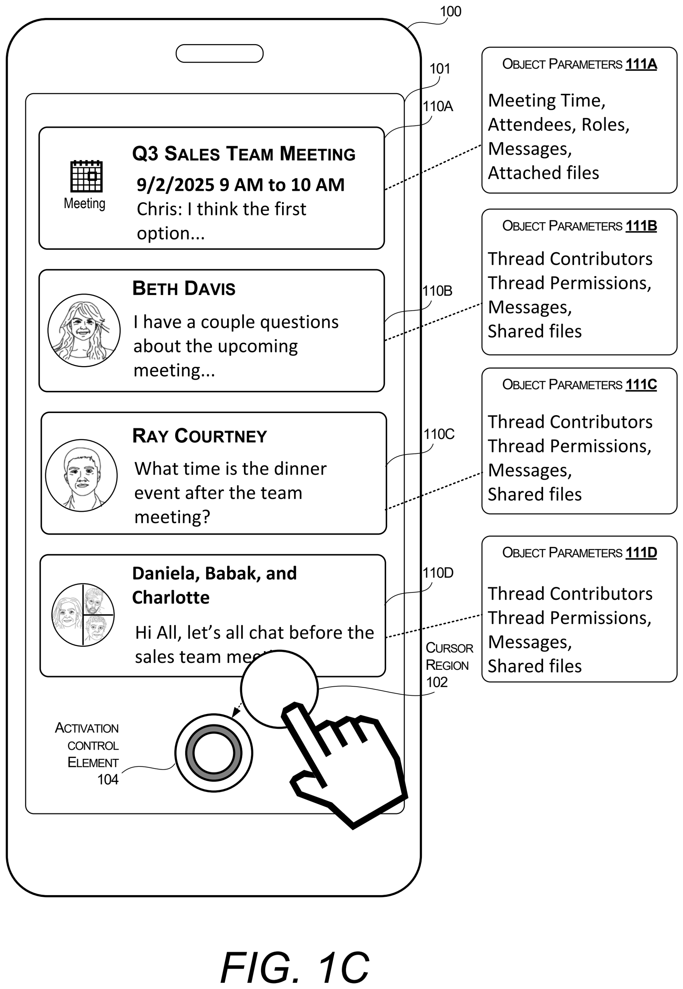

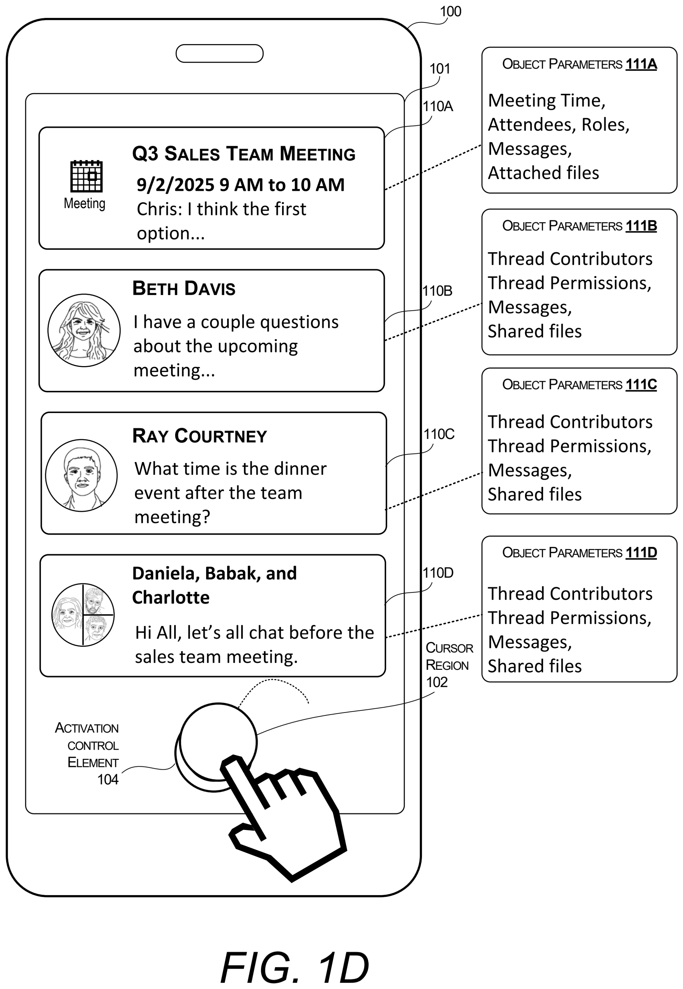

The FIGURES show a system 100 that provides a dynamic microphone pointer interface for generating contextual voice commands. The system 100 provides an input mechanism that combines a voice input 121 and a physical input gesture 103. As shown in the transitions between FIGURES 1A-1D, 2A-2D, 3A-3E and 4A-4D, the system 100 displays a user interface (UI) 101 having an activation control element 104 that can transition into a movable microphone icon 301. The microphone icon 301 can be moved by the physical input gesture 103 to a region 110A associated with a specific data object, such as a meeting, email, a chat thread, or a file. While the microphone icon 301 is at a position indicating a selection of the region 110A associated with a specific data object, the system can combine the voice input 121 with parameters 111A of the selected data object 110A to complete desired tasks. This combination provides a technical improvement over a system that only receives a user's voice command by deriving context from the physical input gesture and combining that context with the user's voice command. This combination provides a more contextually accurate and efficient input method that mitigates the need for repeated attempts trying to have a computer execute desired functions.

FIGURE 1A shows a system 100 displaying a UI 101 with a cursor region 102 and an activation control element 104. The UI 101 also includes object representations 110 that are associated with specific data objects 111. For example, the first object representation 110A is a graphical representation of a calendar event, the second object representation 110B is a graphical representation of a first chat thread, the third object representation 110C is a graphical representation of a second chat thread, etc. In some embodiments, the cursor region 102 is displayed or the cursor region 102 is invisible to the user but the system defines dimensions of the cursor region 102 to determine if the cursor region 102 has overlap with other UI elements.

Each object representation 110 is associated with object parameters 111. For example, the first object representation 110A is associated with a first set of object parameters 111A that define a meeting time, names of meeting invitees, messages, and other shared content. The second object representation 110B is associated with a second set of object parameters 111B that define thread contributors, permissions for each contributor, and other shared content. The other object representations are also associated with other sets of parameters for other threads, which could also be in the form of email threads, text messages, etc. Although this example shows representations of meetings and message threads, it can be appreciated these representations can be used for any other type of data including files, operating system functions, etc. In such examples, each object representation is associated with parameters, e.g., application names, file names, file paths, operating system functions, etc.

As shown in the transitions between FIGURES 1A-1D, the system 100 controls a position of a cursor region 102 within a user interface 101 to follow a position of a physical input gesture 103 provided by a user. The system monitors the position of the cursor region 102 to determine if the position of the cursor region 102 indicates a selection of an activation control element 104 (also referred to herein as a "activation button"). This determination can be achieved using a number of different techniques. For example, the system can determine that the position of the cursor region 102 indicates a selection of an activation control element 104 when the cursor region 102 has a threshold overlap with an activation control element 104. In another example, the system can determine that the position of the cursor region 102 indicates a selection of an activation control element 104 when the cursor region 102 has a threshold overlap with an activation control element 104 for a predetermined time period, e.g., half of a second.

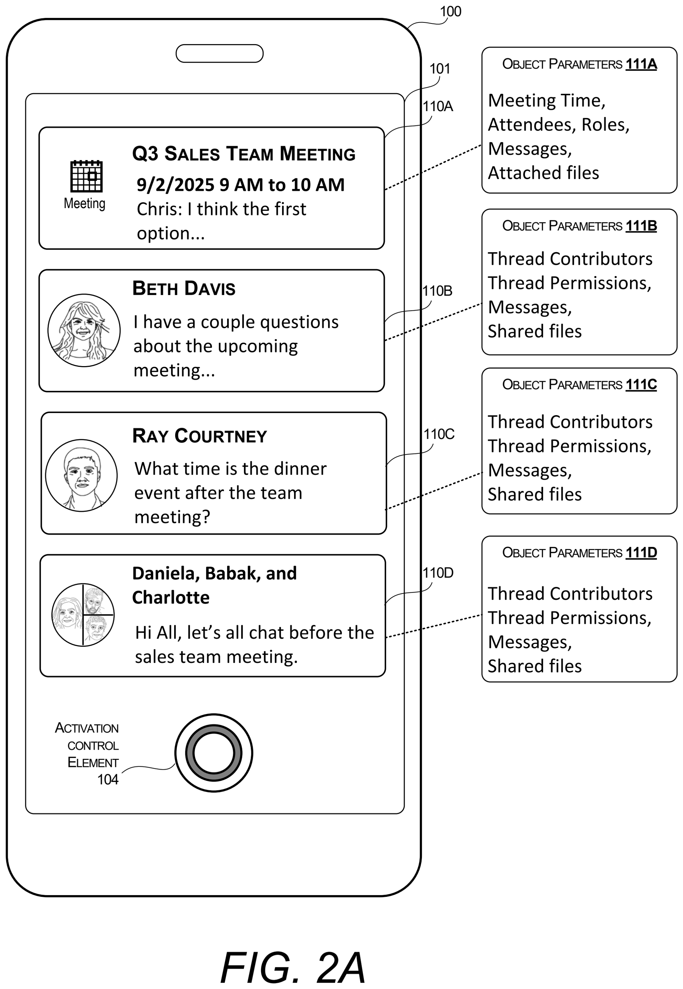

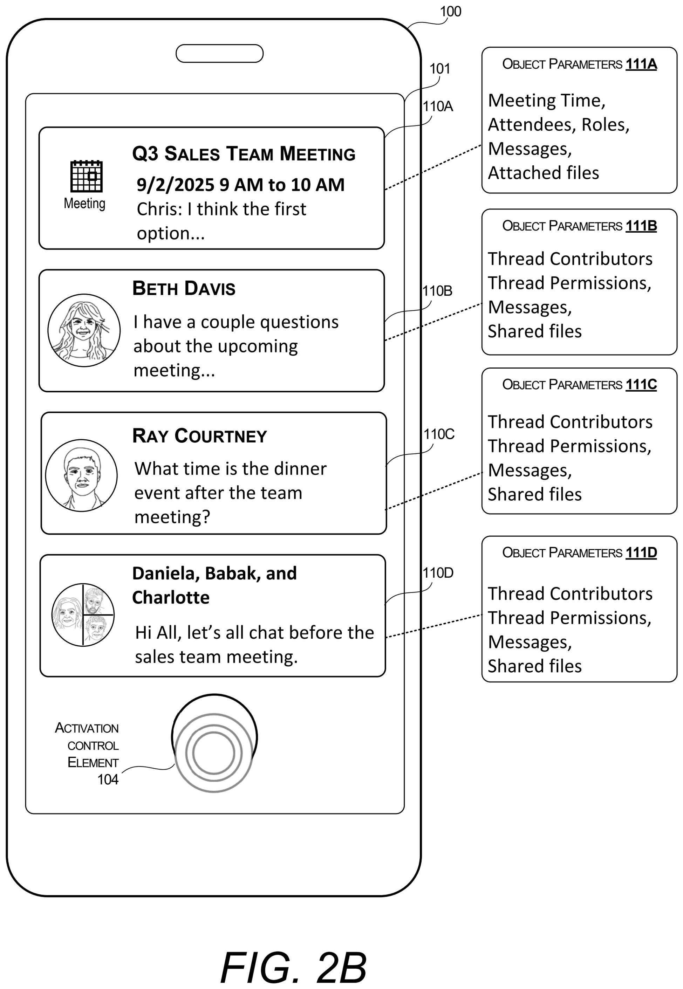

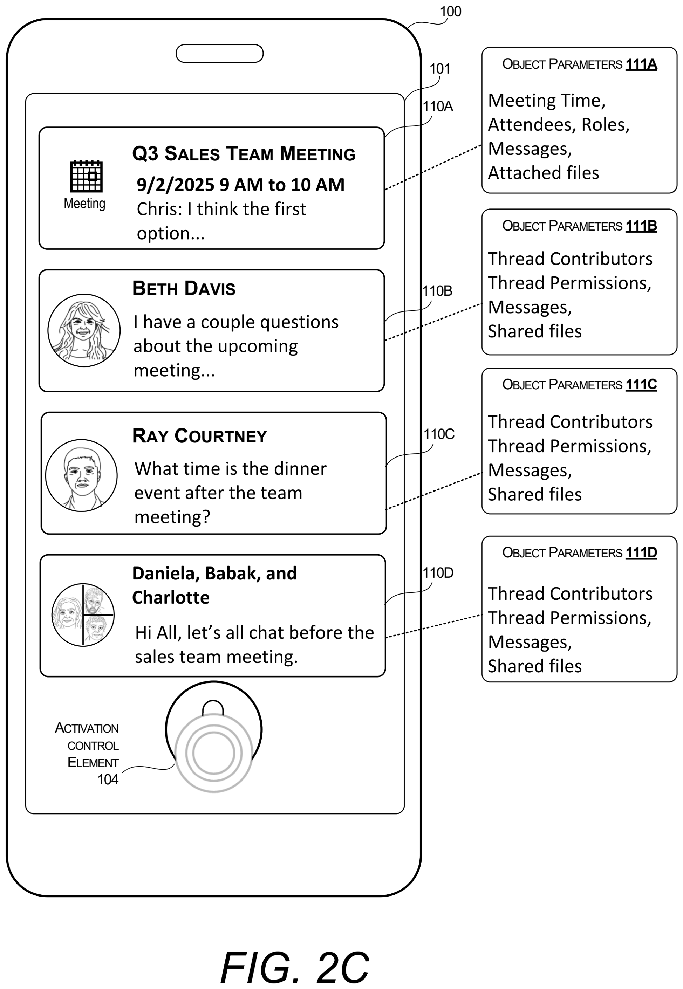

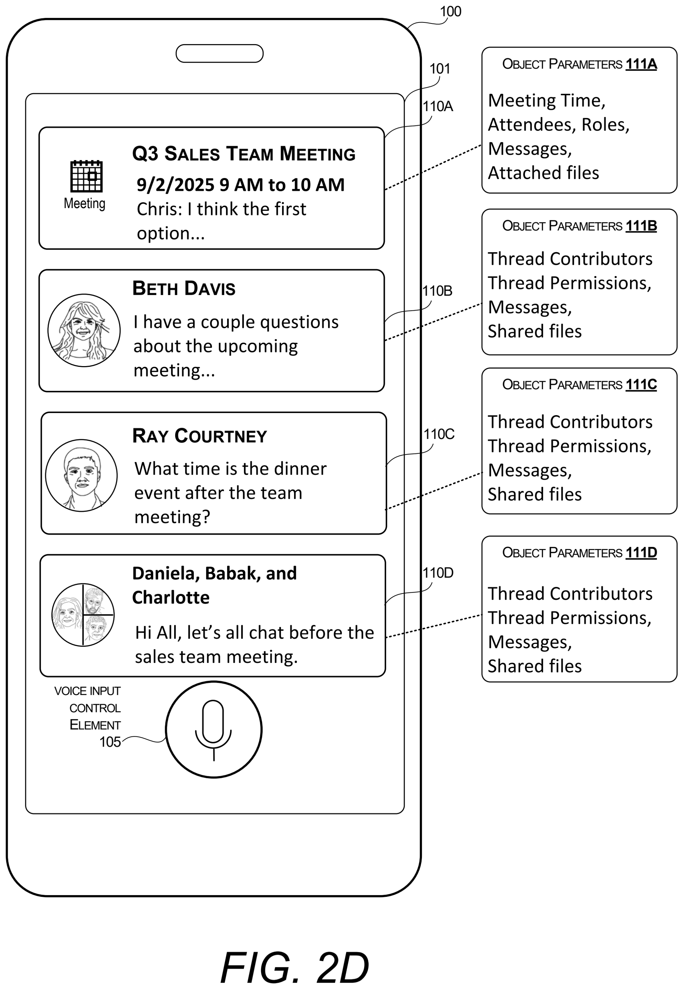

As shown in the transitions between FIGURES 2A-2D, when the system determines that the position of the cursor region 102 indicates a selection of an activation control element 104 ("activation button 104"), the system changes the activation control element 104 to a voice input control element 105 (also referred to herein as a "movable voice input button 105" or a "voice input control button 105"). In some embodiments, this includes operations for converting the activation control element 104 to the voice input control element 105, in response to determining the position of the cursor region 102 has the threshold overlap with the activation control element for the predetermined time period. Once converted, the system moves the voice input control element 105 to follow the physical input gesture 103 provided by the user.

In some embodiments, the activation button 104 can be converted into the voice input control button 105 in response to a number of other actions. For instance, a voice command or other touch gesture can be utilized. And one example, a voice command indicating a particular keyword can be used to convert the activation button into the voice input control button. And another embodiment, a tap and hold or a long press on a keyboard or a screen can activate the display of the voice input control button. A hover gesture can also cause the transitions described herein. In some configurations, when the voice input control button is generated, the system can also provide haptic feedback or a sound to indicate confirmation of the conversion of the activation button to the voice input control button. In addition to touch screen gestures or cursor gestures by an input device such as a mouse, the system can also select user interface elements by the use of an eye gesture or any other type of gesture such as a hand gesture over a camera or screen, etc.

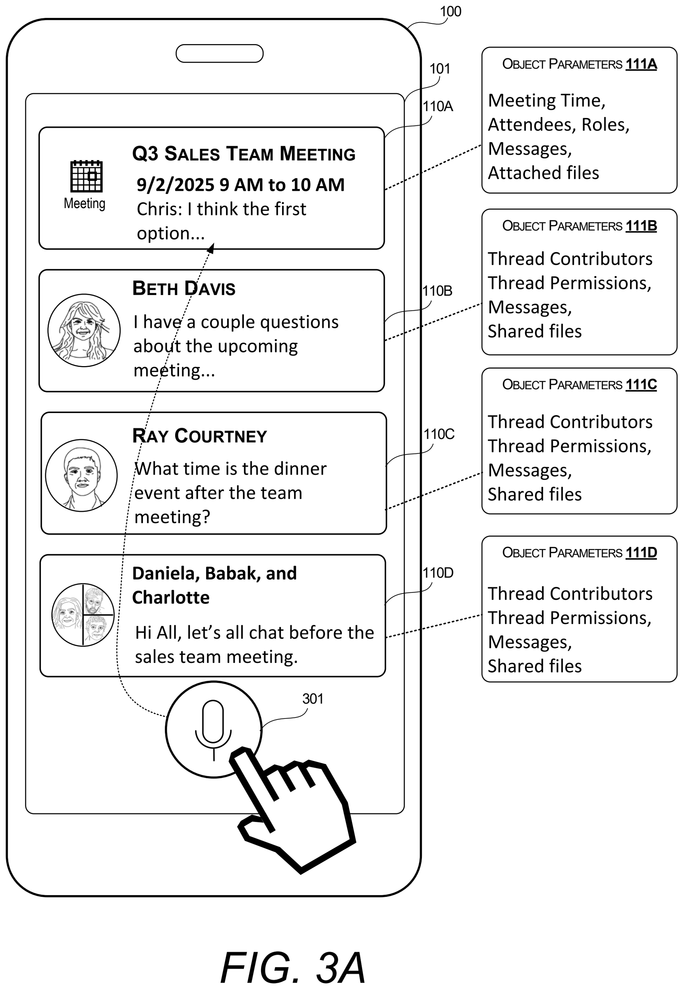

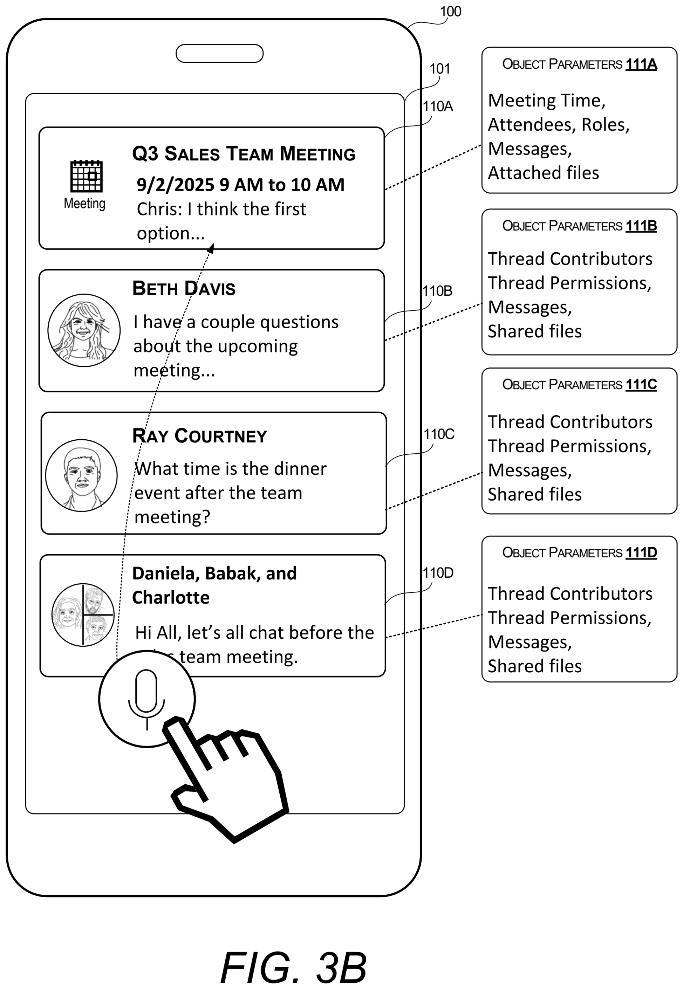

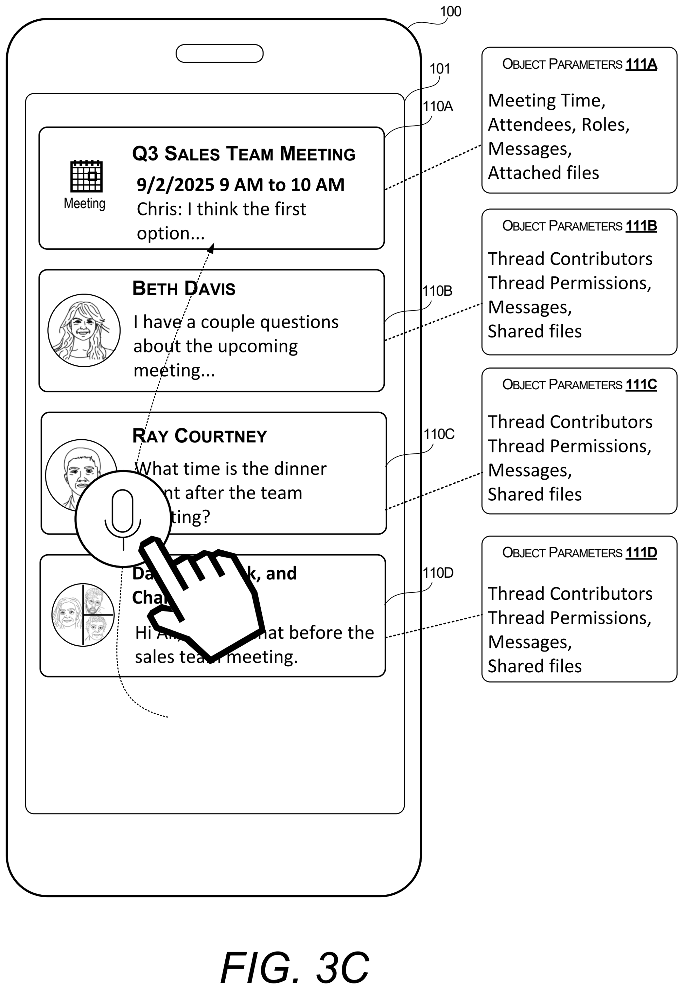

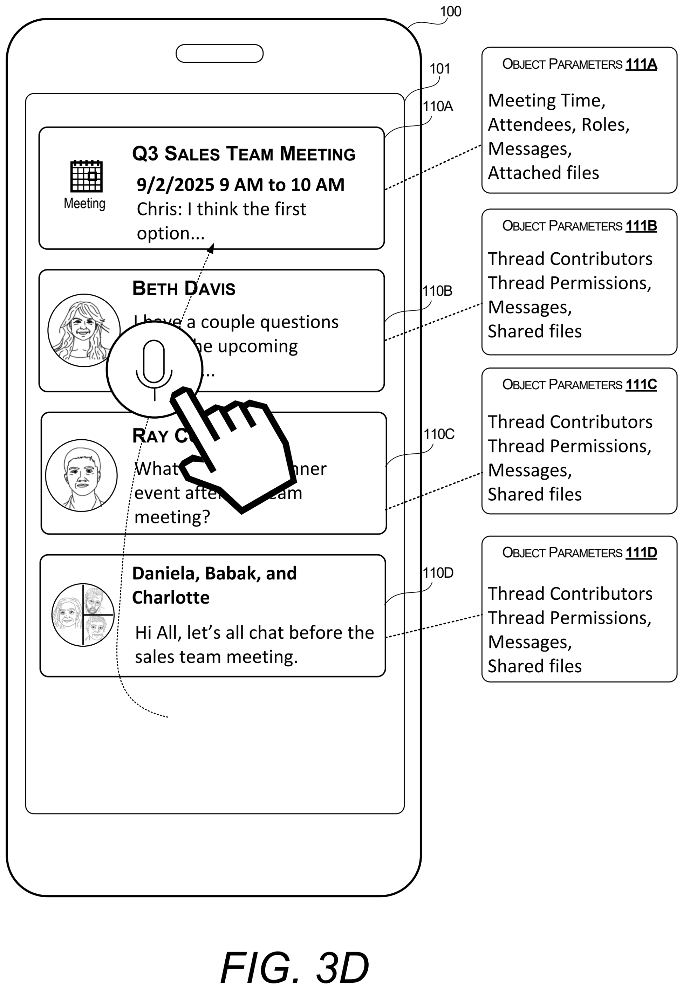

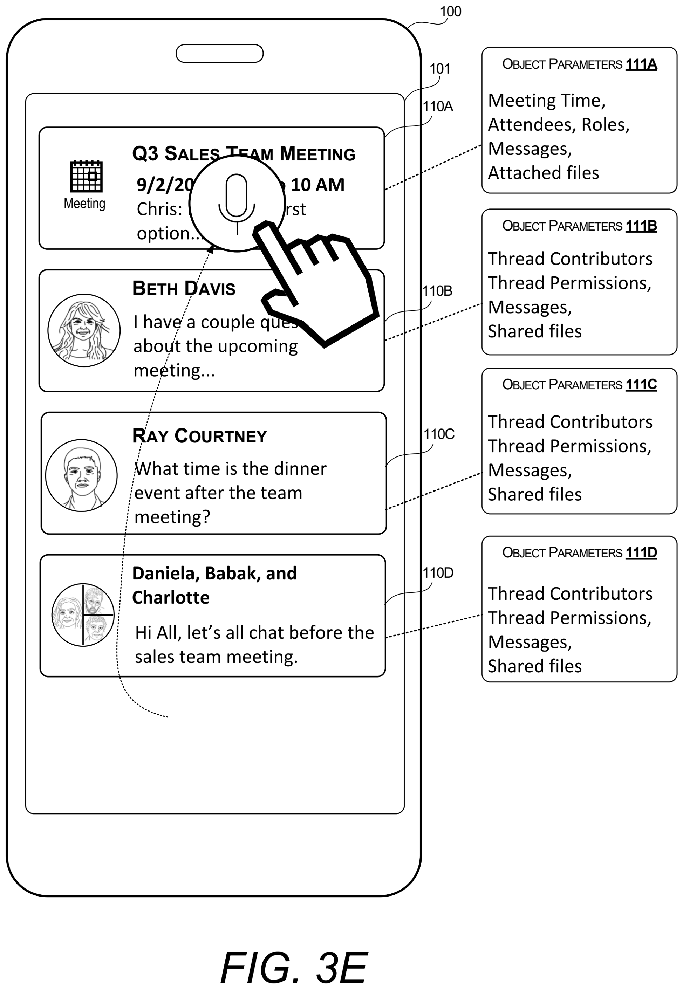

As shown in the transitions between FIGURES 3A-3E, the system monitors the position of the voice input control element 105 to determine if the position of the voice input control element 105 indicates a selection of a particular object representation 110. Similar to all embodiments herein, a selection of an object representation can be achieved by the use of any suitable technique, including determining a threshold level of overlap between the movable control element and an object representation, determining a threshold level of overlap between the movable control element and an object representation for a predetermined time period, etc.

In the example of FIGURES 3A-3E, the physical input gesture moves the voice input control element 105 to a position that indicates a selection of the first object representation 110A, which is a meeting object. When the system determines that the position of the voice input control element 105 indicates the selection of the first object representation 110A, the system transitions to an operating state where the system can receive a voice input at a microphone.

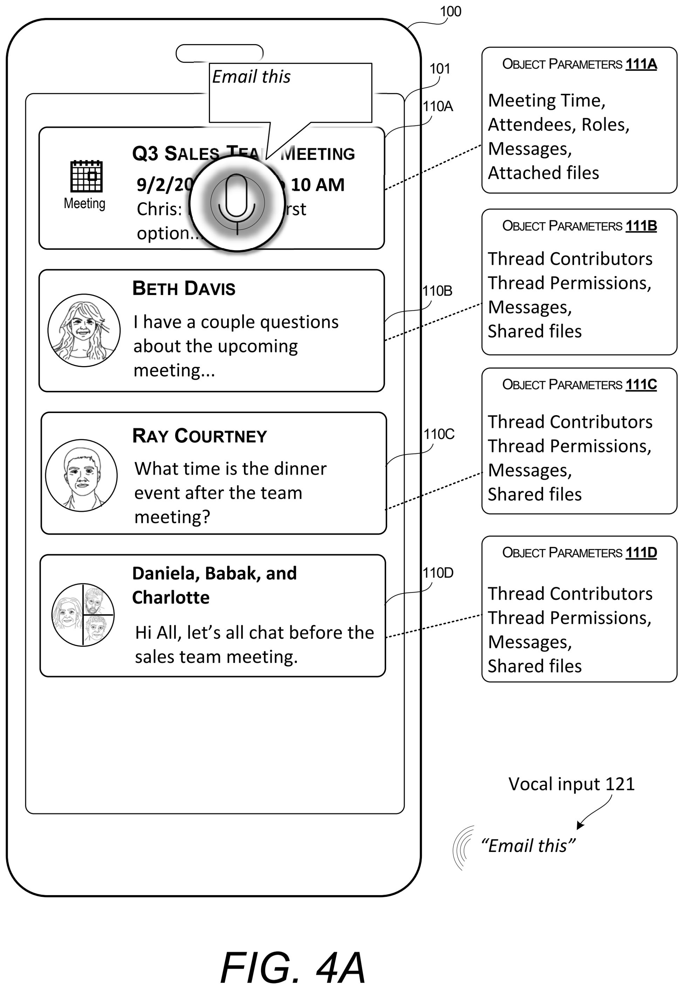

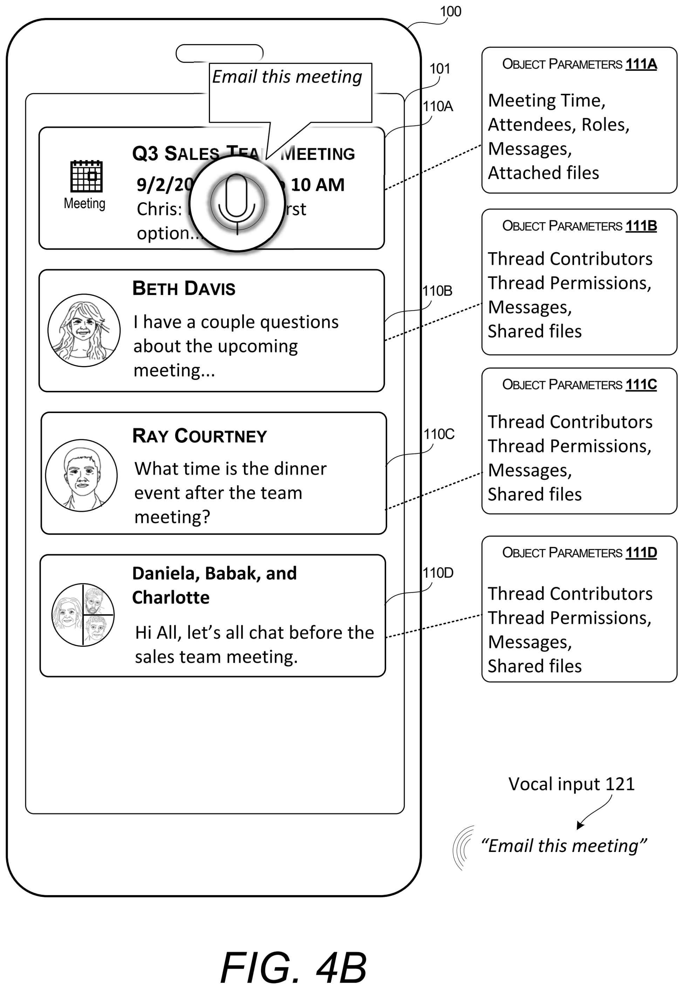

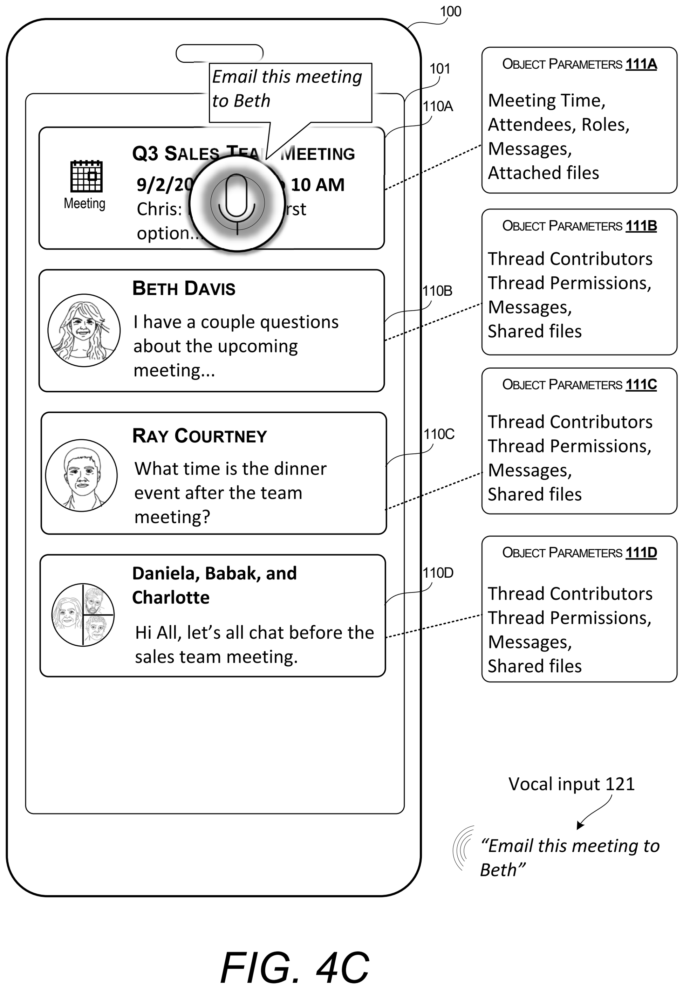

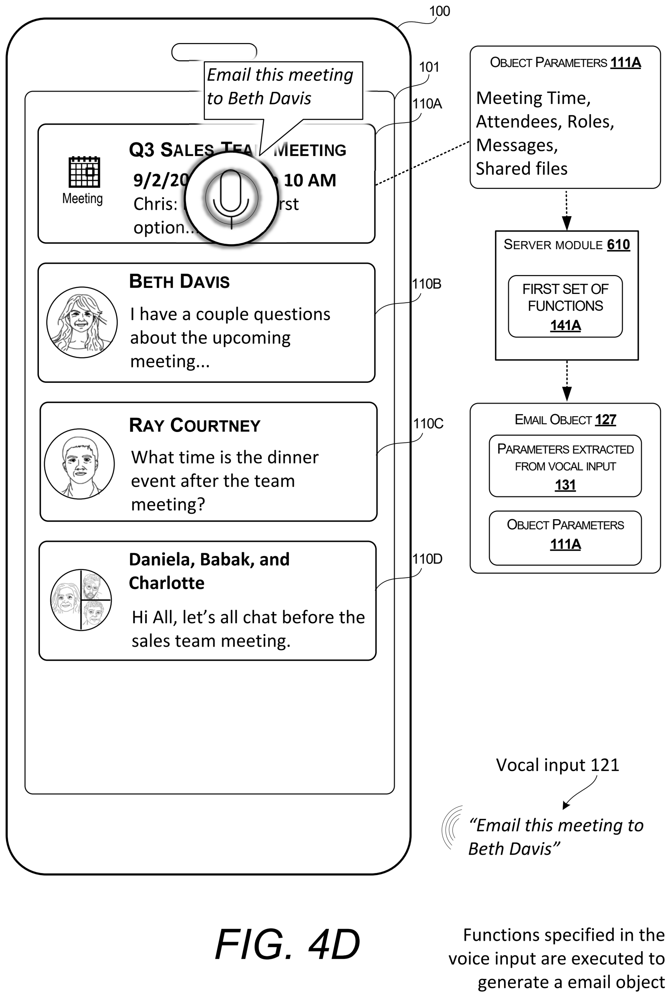

As shown in the transitions between FIGURES 4A-4D, the system receives a voice input while the physical input gesture indicates the selection of the first object representation 110A. With reference to FIGURE 4D, the system generates instructions or parameters that are interpreted from an audio stream of the voice input 121. This can be achieved by the use of a large language model (LLM) with the use of a query that causes the LLM to generate instructions or parameters from a text transcript of the voice input. For example, an LLM can determine that the voice input has identified a recipient and also identified instructions for that recipient to receive an email with the selected data object, e.g., the meeting, as an attachment in the email. As shown in FIGURE 4D, those instructions can be used to generate a first set of functions 141A (also referred to herein as "customized computer-executable instructions 141") that are executed by a computer, e.g., a server module 610 of the system 100. Those functions can then cause the computer to generate an email object 127 having the parameters 131 that are extracted from the voice input and other object parameters 111A that are associated with the selected object representation. These operations can include obtaining a set of parameters 111A associated with the object representation 110A, and generating instructions or parameters that are interpreted from an audio stream of the voice input 121.

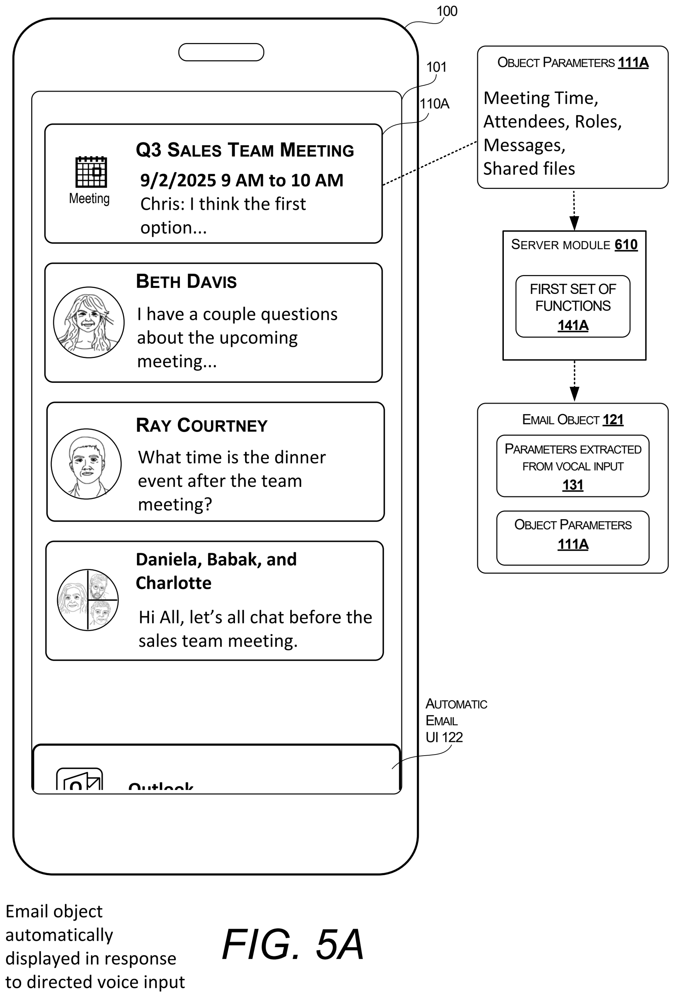

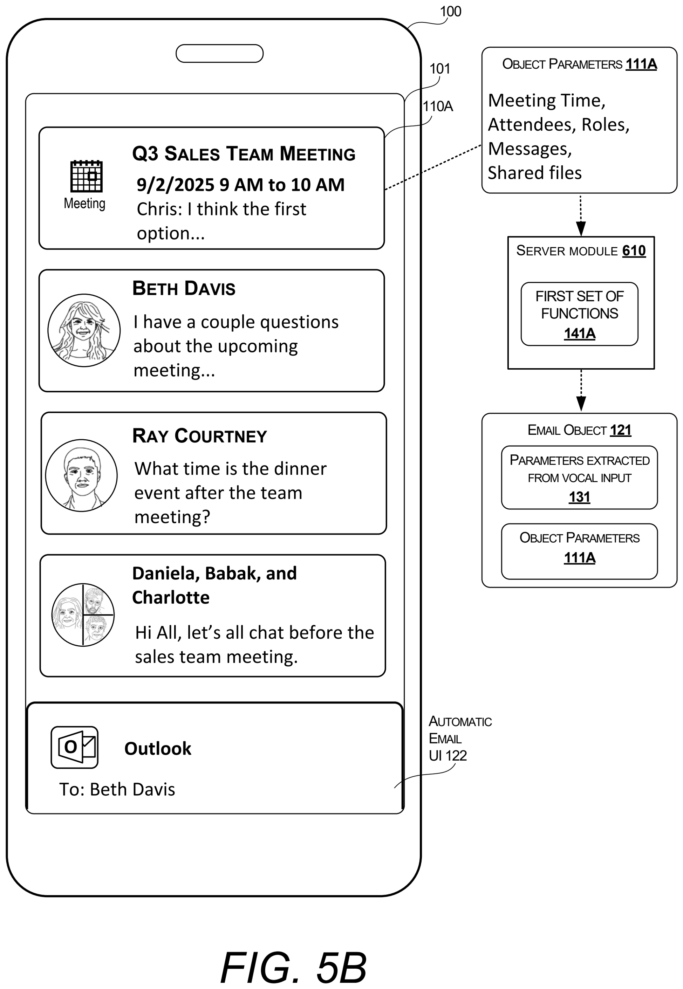

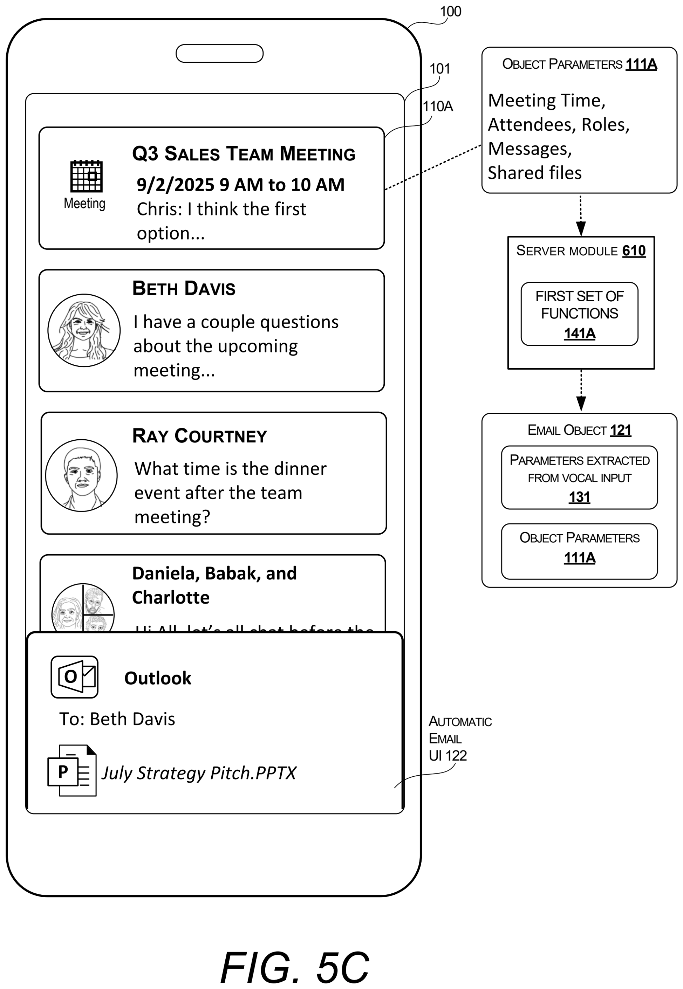

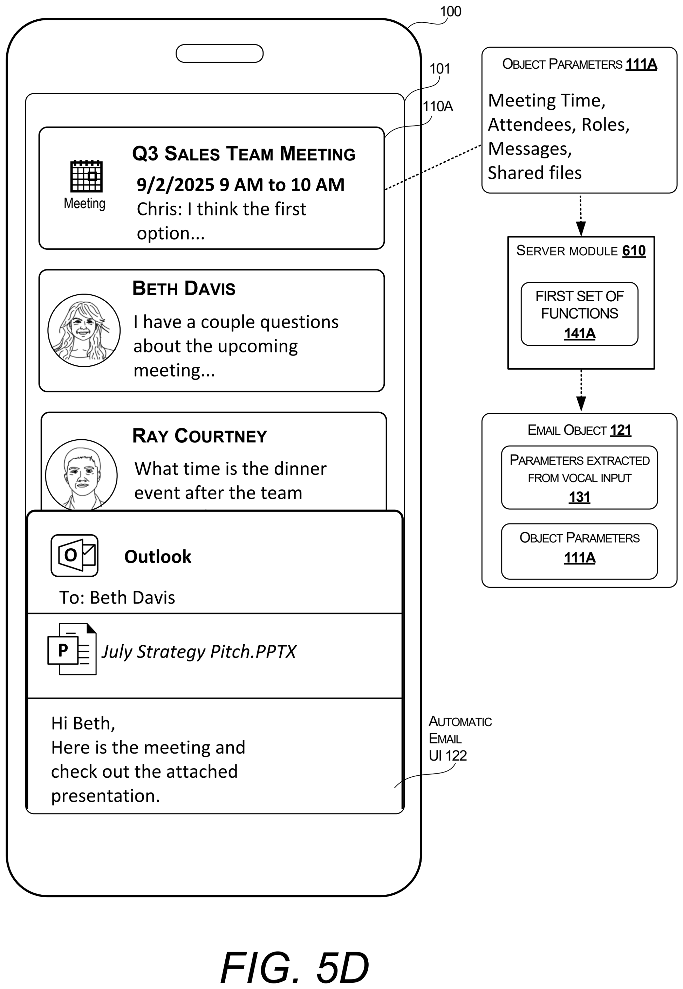

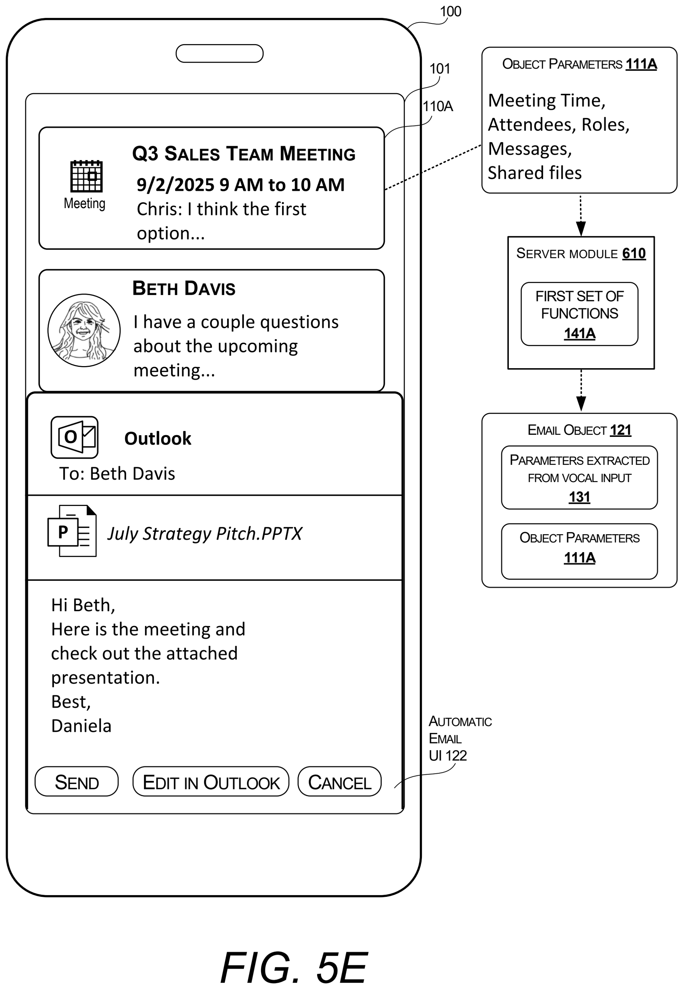

Then, as shown in FIGURES 5A-5E, the system can execute the customized computer-executable instructions that are generated using the combination of the set of parameters 111A associated with the object representation 110A and the instructions or parameters that are interpreted from the audio stream of the voice input 121. In this example, the customized computer-executable instructions cause the system to automatically display an email draft 122 in response to the combination of the physical input gesture and the voice input. The email draft is automatically populated with the recipient named in the voice input and the meeting attachment that is identified in the voice input. The email may be automatically sent to the recipient or the email may be sent in response to an additional user input, e.g., at the send button.

In addition to the selection of a user interface element, such as a window or a meeting icon, a physical input gesture can also identify particular objects within an image. Thus, a person can hover a cursor or look at a particular person within a photo. In response, the system can then retrieve information from that photo to retrieve a person's identity or any other relevant information for that object in the photo This allows for scenarios where a user can look at a particular person and say they would like to e-mail that person a message.

A person can also select text within a document using a physical input gesture. For instance, a physical input gesture can indicate a selection of a particular paragraph in a document. While that input is provided, the user can provide instructions to make edits to that document or make changes using a large language model. For instance, that allows a person to point at a paragraph and say "I would like to make this more punchy" or "please edit this document for typographical errors." In another example, a person can point at a video using a physical input gesture and provide a voice input such as, "please write a summary on the sentiment of this video or summarize this video."

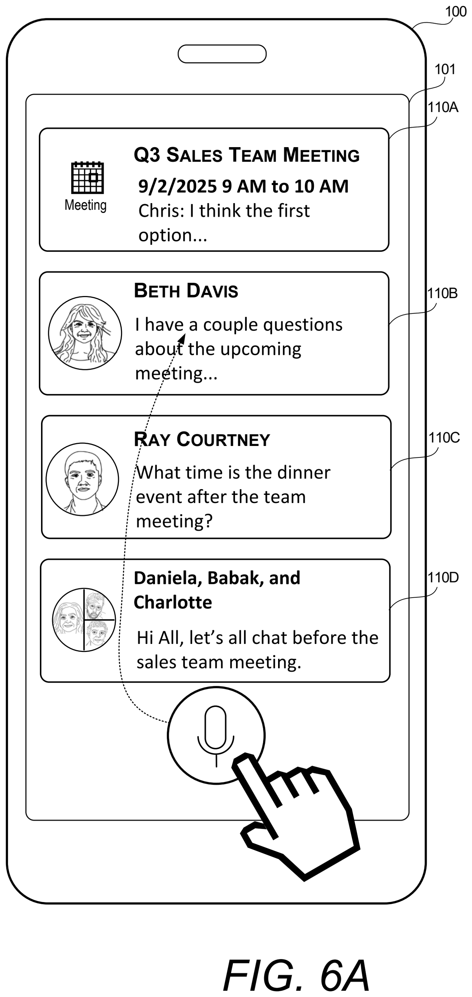

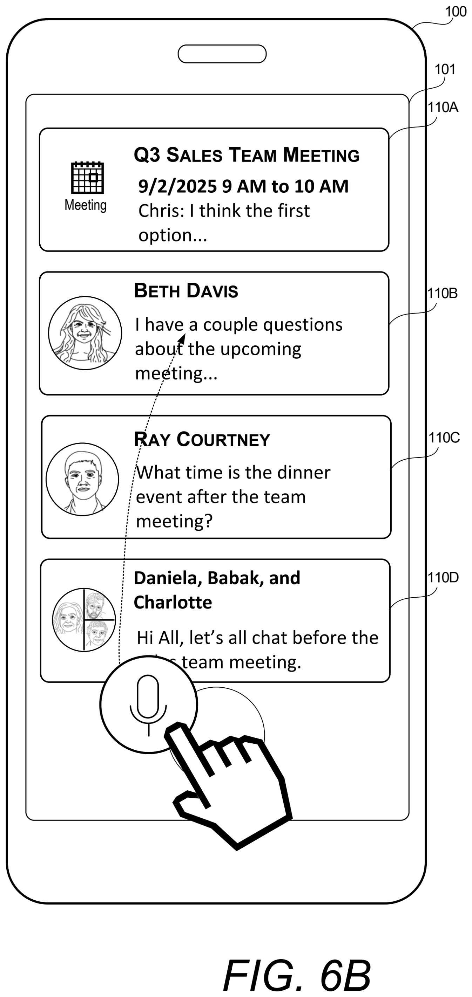

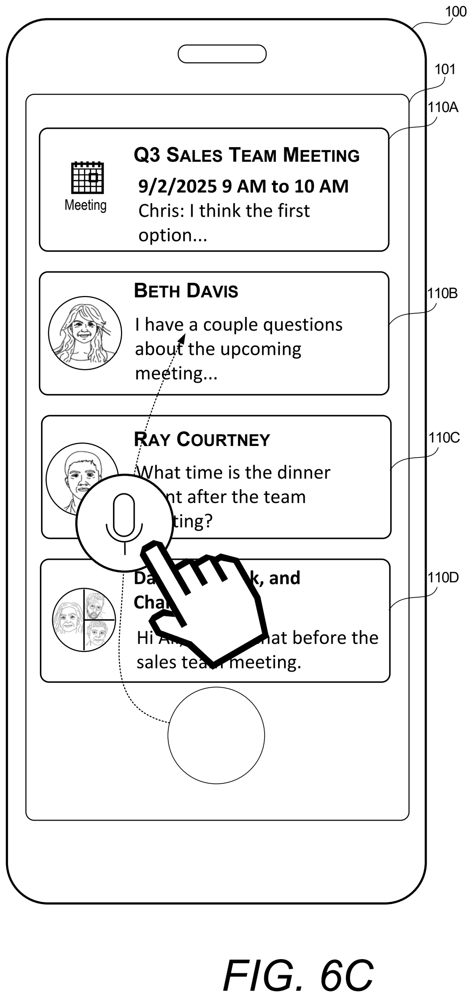

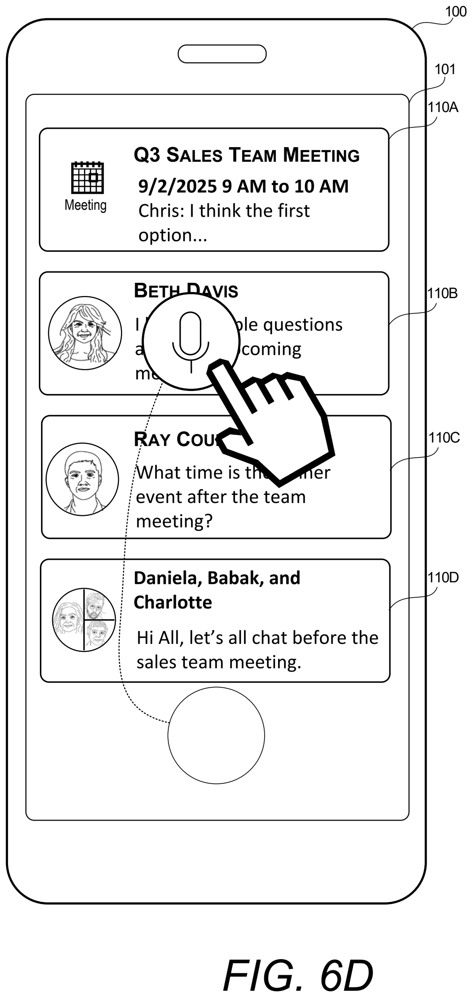

Referring now to FIGURES 6A-6D, 7A-7B, and 8A-8C, an example involving a voice input with a physical input gesture indicating a selection of a chat thread is shown and described below. In this example, the voice input control element 105 can be displayed in response to the cursor region 102 having an overlap with the activation button.

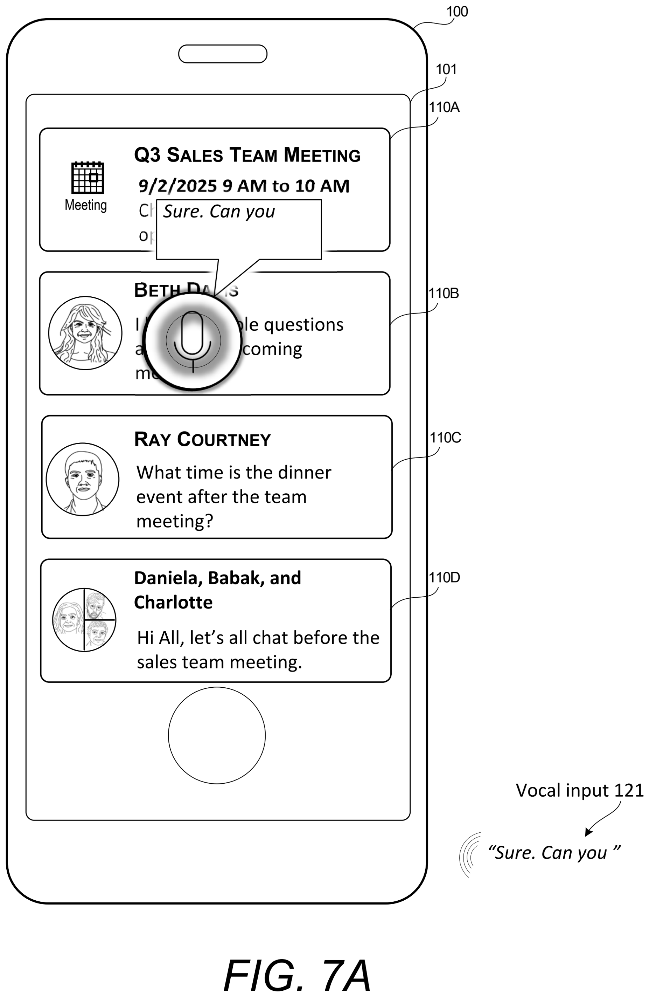

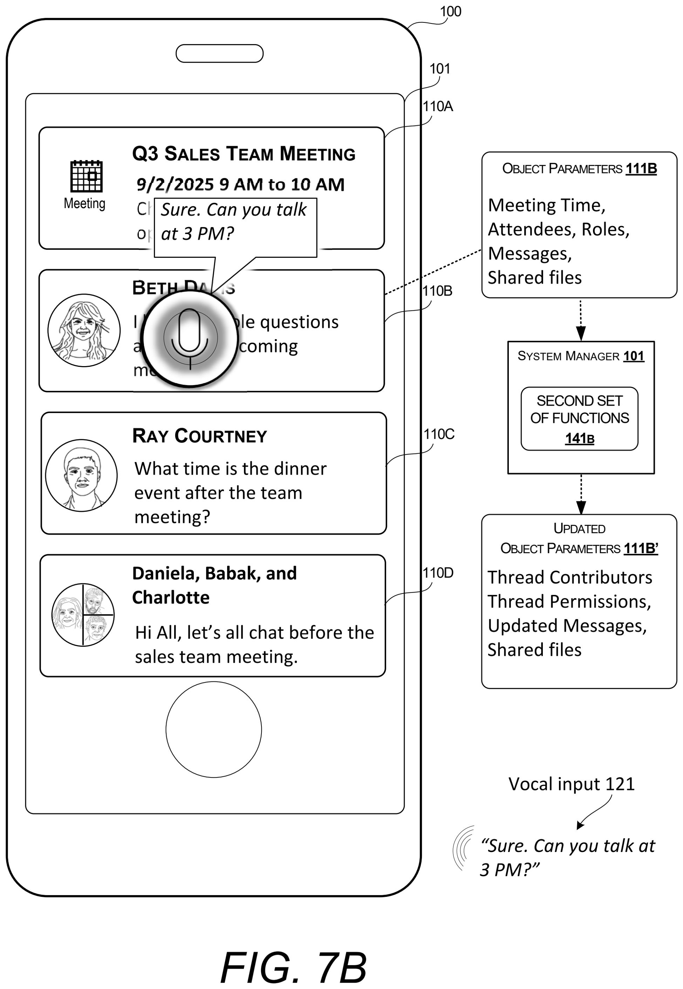

As shown in the transitions between FIGURES 6A-6D, the system monitors the position of the voice input control element 105 to determine if the position of the voice input control element 105 indicates a selection of a particular object representation 110, such as the second object representation 110B. Once the object representation 110 is selected, the system receives a voice input and generates updated parameters 111B' from the parameters 111B that are selected by the physical input gesture. In this example, as shown in FIGURES 7A and 7B, the voice input provides content to add to the selected chat thread. The system also generates a set of functions, e.g., customized computer executable instructions, for causing the system to add the new content to the chat thread. In this example, this causes the system to generate updated parameters 111B' that includes the original thread of the parameters 111B that are selected by the physical input gesture with the addition to the message dictated by the use in the voice input.

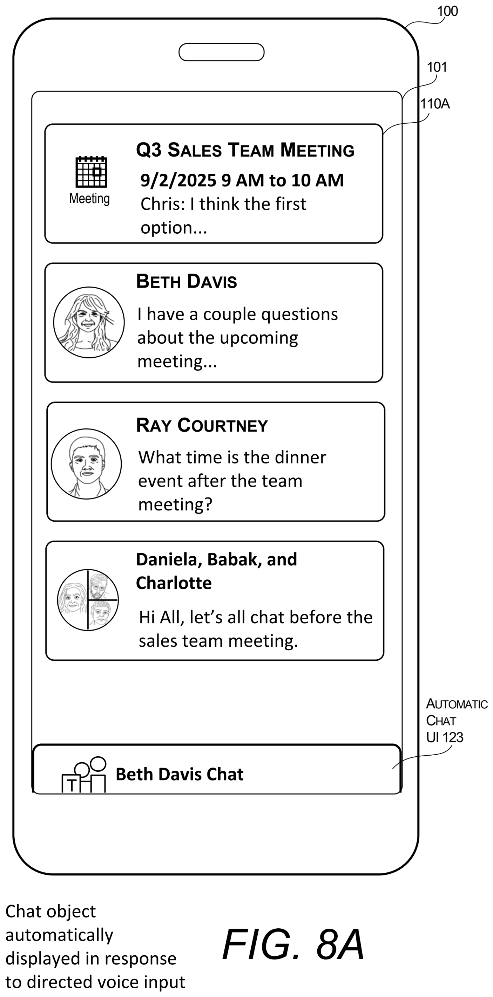

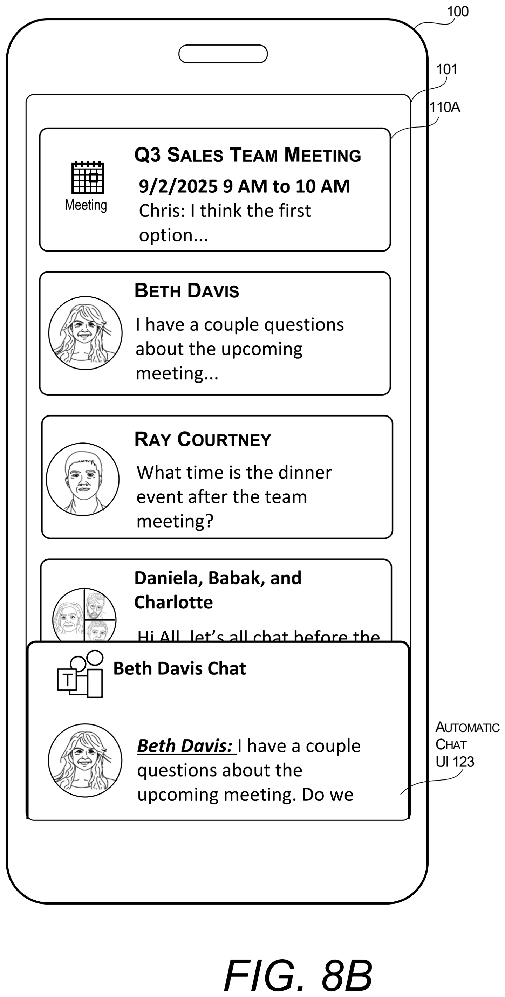

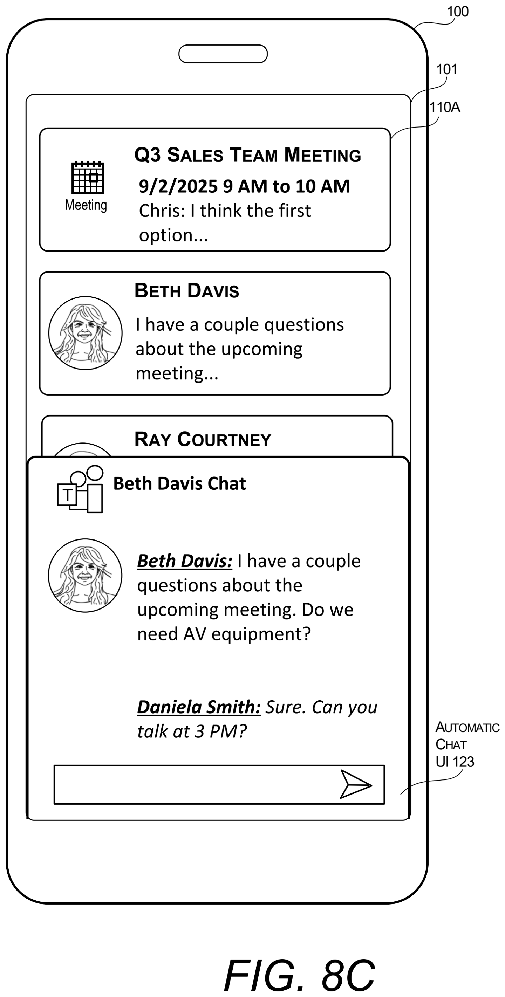

Then, as shown in FIGURES 8A-8C, the system can automatically display a portion of the selected chat thread 123 along with the message provided in the voice input. This message can be automatically sent to the thread or sent in response to an additional user input.

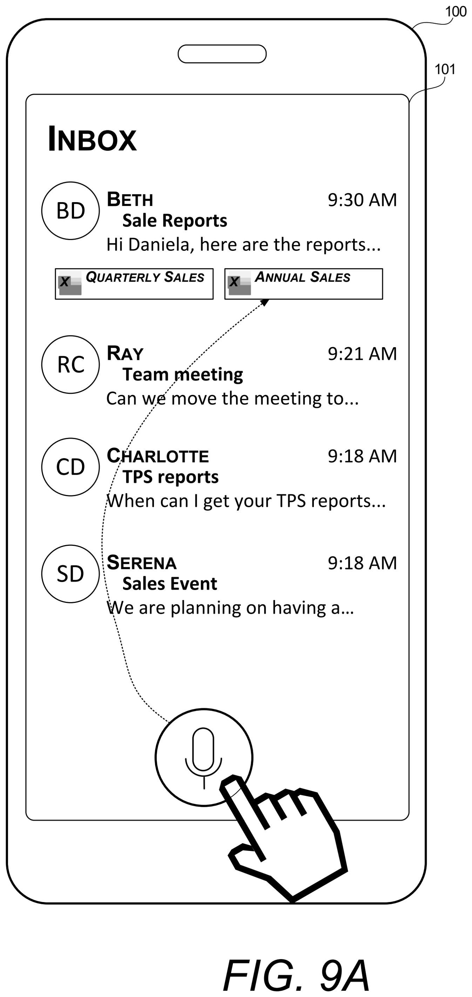

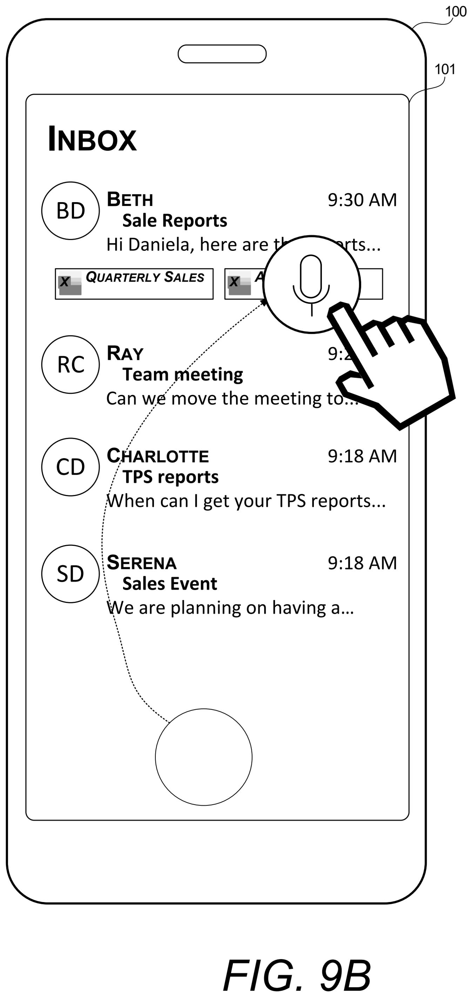

Referring now to FIGURES 9A-9B, 10, and 11, an example involving a voice input with a physical input gesture indicating a selection of an email attachment is shown and described below. In this example, the voice input control element 105 can be displayed in response to the cursor region 102 having an overlap with the activation button. In this example, the UI shows an email message thread that also displays portions of individual messages and attachments.

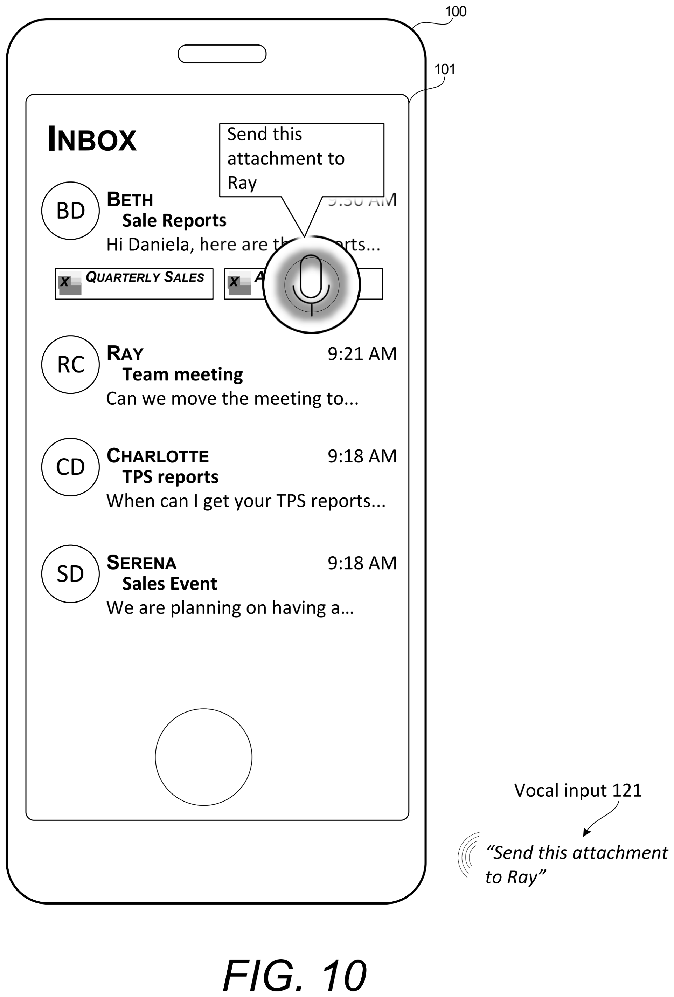

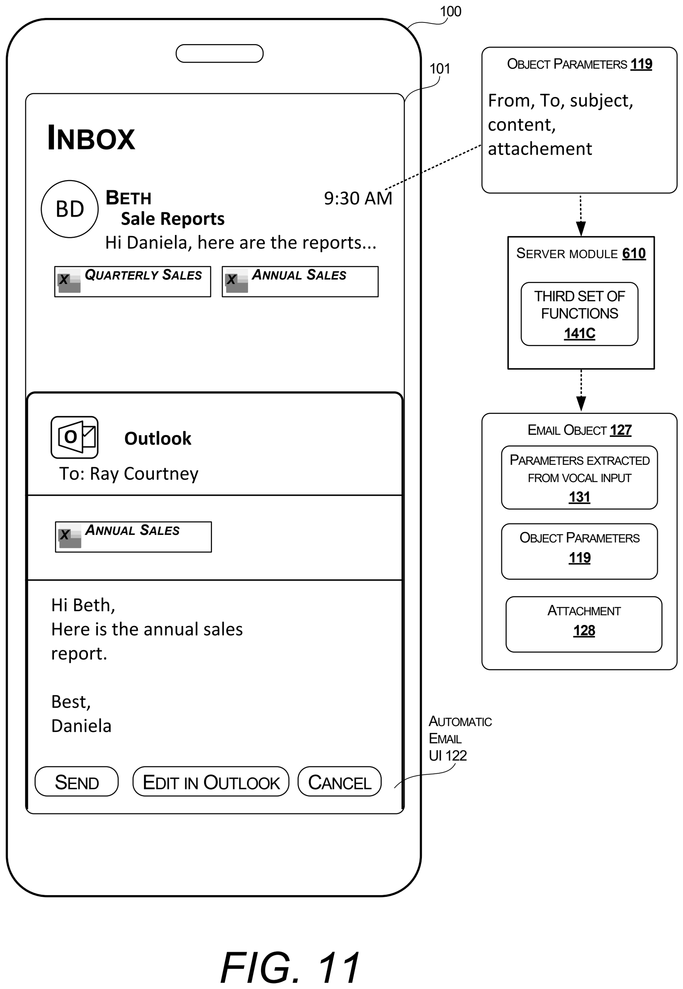

As shown in the transitions between FIGURES 9A-9B and 10, the system monitors the position of the voice input control element 105 to determine if the position of the voice input control element 105 indicates a selection of a particular object representation 110, an email attachment for a particular email. Once the email attachment is selected by the physical input gesture, the system receives a voice input. Then, as shown in FIGURE 11, the system generates a new email object 127 using a third set of functions 141C that are generated from the voice input. The email object 127 includes the parameters 119 of the selected object, e.g., the attachment and other parameters, e.g., the subject line of the email, and parameters extracted from the voice input, e.g., the recipient's name and/or email address. The system can automatically display the new email. The system can automatically send the email or the system can send the email in response to an additional user input, e.g., a selection of the send button.

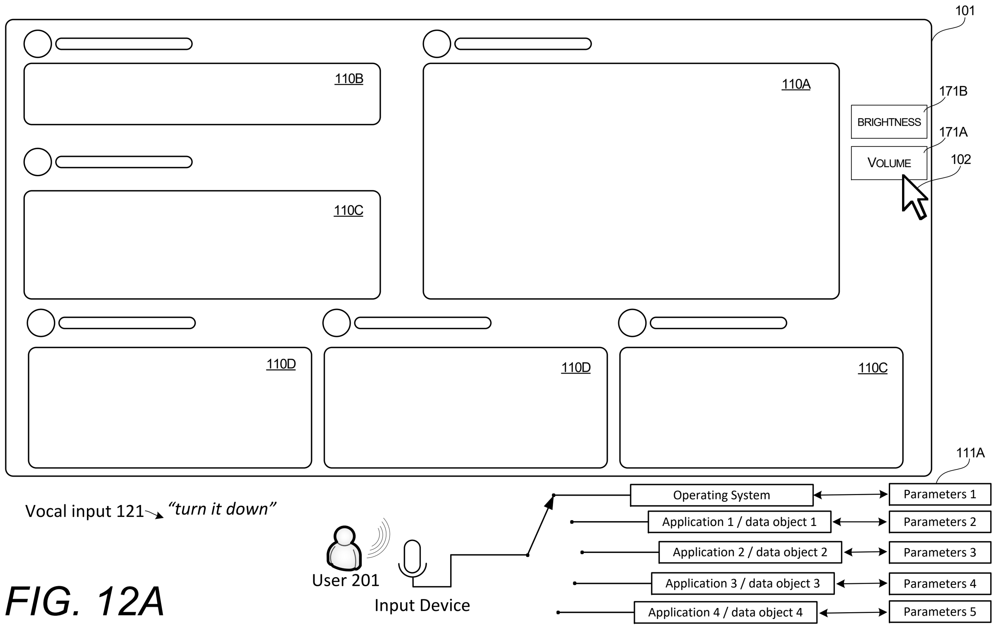

FIGURES 12A-12E show an embodiment where a cursor can be used to select object representations by the use of the physical input gesture controlling the location of the cursor, and once an object is selected, the system can combine parameters of the selected object with parameters that are interpreted from a voice input.

This process can include operations for controlling a position of a cursor 102 within a user interface 101 to follow a position of a physical input gesture provided by an input device 626, the user interface 101 comprising a plurality of object representations 110 that are each associated with individual sets of parameters 111. The system can then monitor the position of the cursor 102 to determine that the position of the cursor 102 indicates a selection of the object representation 110A from the plurality of object representations 110 displayed within the user interface 101. In response to determining that the position of the voice input control element 105 selection of the object representation 110A, the system can then (1) obtain a set of parameters 111A associated with the object representation 110A, (2) generating instructions or parameters that are interpreted from an audio stream of the voice input 121, and (3) execute the customized computer-executable instructions using a combination of the set of parameters 111A associated with the object representation 110A and the instructions or parameters that are interpreted from the audio stream of the voice input 121.

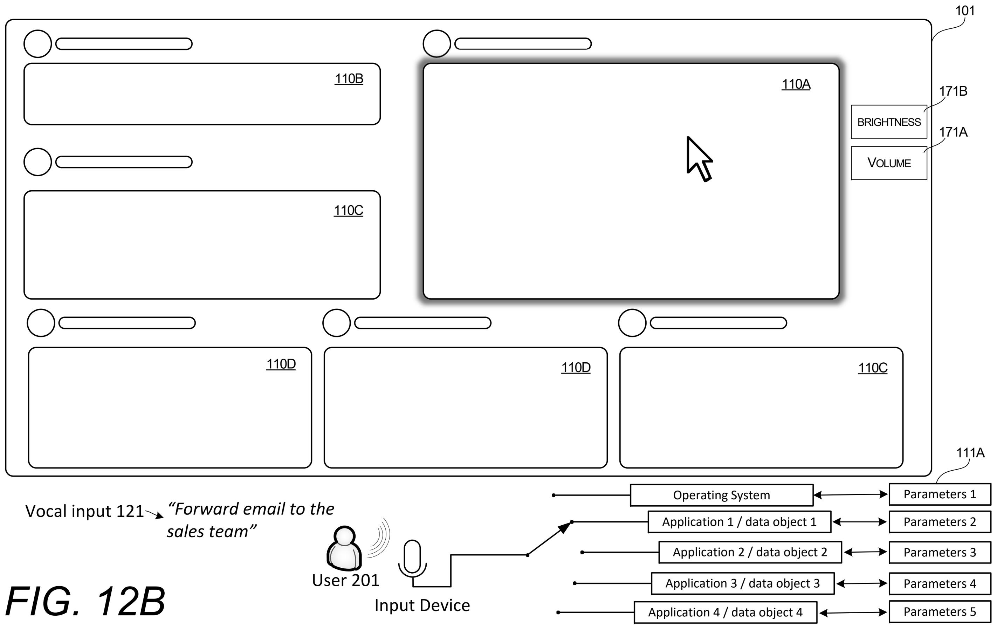

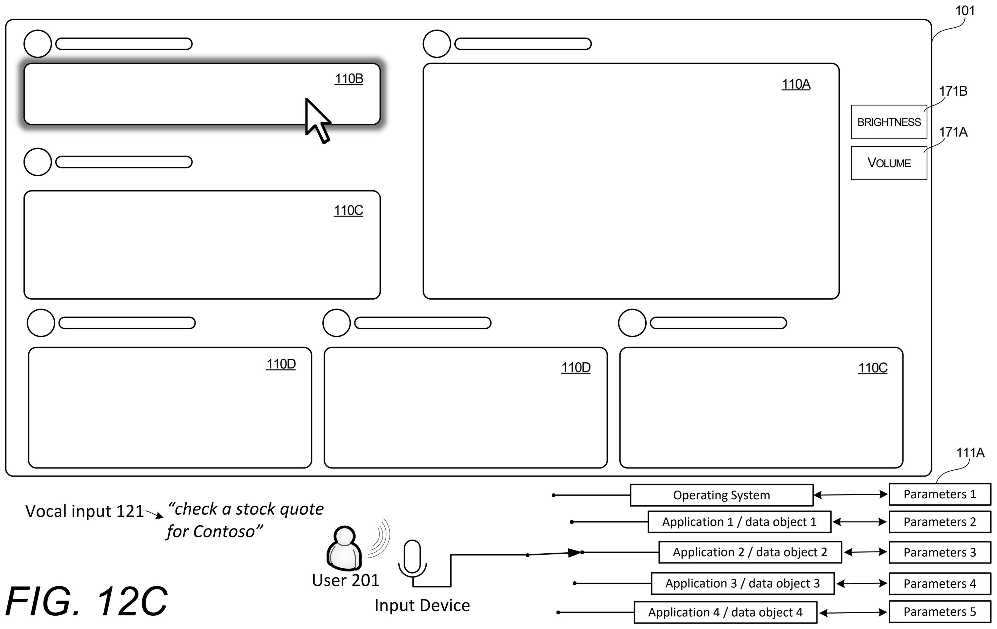

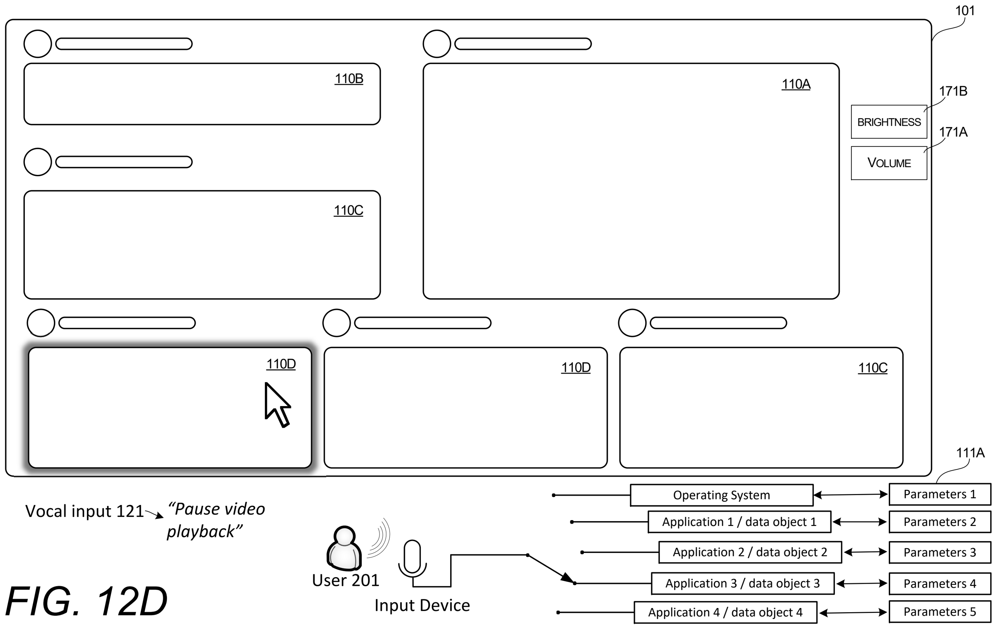

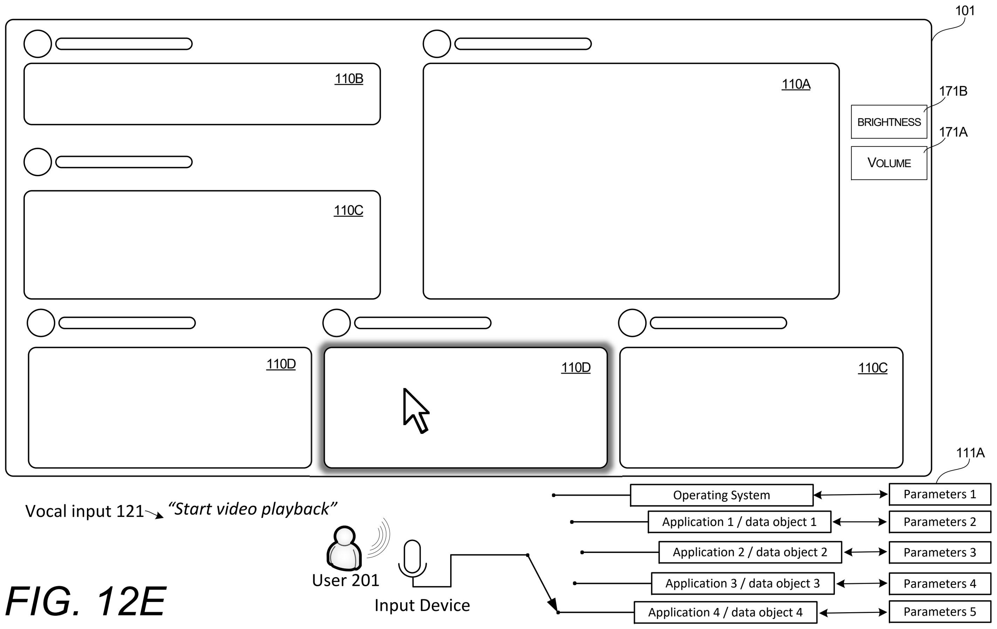

As shown in FIGURE 12A the position of the cursor 102 shows a selection of a operating system control element 171, such as a volume control element 171A and a brightness control element 171B. In this example, when the cursor is indicating a selection of the volume control element, the system can direct a voice input to the operating system to control the volume by a simple command such as "turn it down." This allows the user 201 to provide a simplified instruction but also allow the user to provide a physical input gesture to indicate that they mean to turn the volume down. This allows for a simplified voice instructions and also allows the system to reduce the number of control elements. Without features disclosed herein, the system would have to display multiple buttons such as a volume up button, a volume down button, and a mute button. But using the disclosed features, as shown in these examples, one a volume button is all that is needed, which can save screen space particularly in small devices such as mobile phones and tablets. Then, as shown in FIGURES 12B-12E, the system can direct a voice input to individual applications that are selected by the physical input gesture. For example, FIGURE 12B shows an example where the system directs a voice input of "forward email to the sales team" to an email application showing emails. FIGURE 12C shows an example where the system directs a voice input of "check a stock quote for Contoso" to a web browser displaying financial data. FIGURE 12D shows an example where the system directs a voice input of "pause video playback" to a video playback application showing a rendering of a video file. FIGURE 12E shows an example where the system directs a voice input of "start video playback" to a video playback application showing a rendering of another video file.

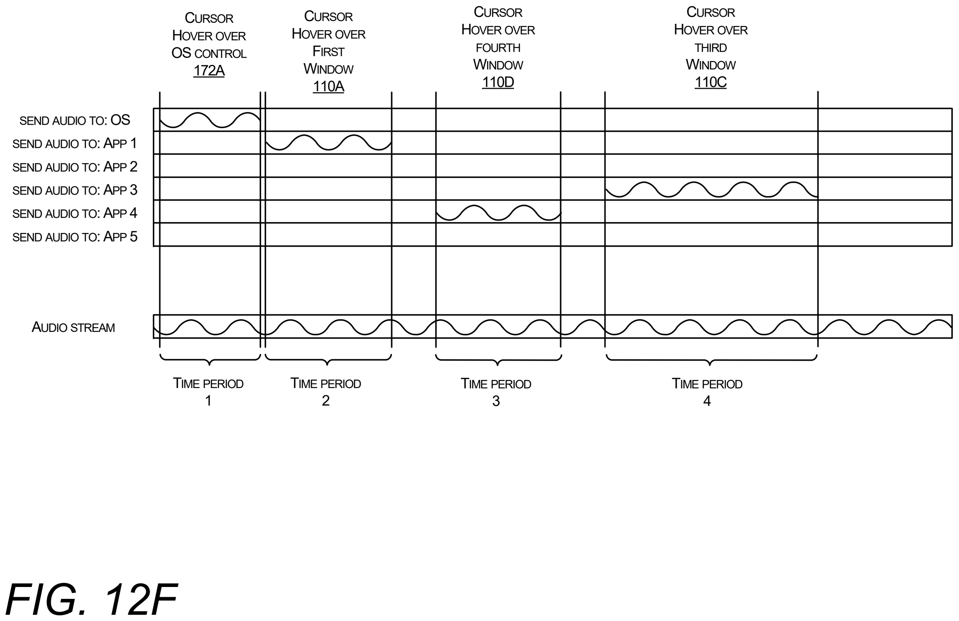

As shown in FIGURE 12F, in some embodiments, the system can time slice and audio stream in direct individual clips of the audio stream based on a user's physical gesture input. For instance, for a first time period, when a user is hovering a cursor over an operating system control button 172A, the system can direct the audio clip for that time period to the operating system where the Operating System interprets instructions or parameters included in that time period of the audio stream and directs those instructions or parameters to Operating System functionality. For a second time period, when a user is hovering a cursor over a window 110A of a first application, the system can direct the audio clip for that time period to the first application, where the Operating System or the first application interprets instructions or parameters included in that time period of the audio stream and directs those instructions or parameters to the first application. For a third time period, when a user is hovering a cursor over a window 110D of a fourth application, the system directs the audio clip for that time period to the fourth application, where the Operating System or the fourth application interprets instructions or parameters included in that time period of the audio stream and directs those instructions or parameters to the fourth application. Also in this example, for a fourth time period, when a user is hovering a cursor over a window 110C of a third application, the system directs the audio clip for that time period to the third application, where the Operating System or the third application interprets instructions or parameters included in that time period of the audio stream and directs those instructions or parameters to the third application.

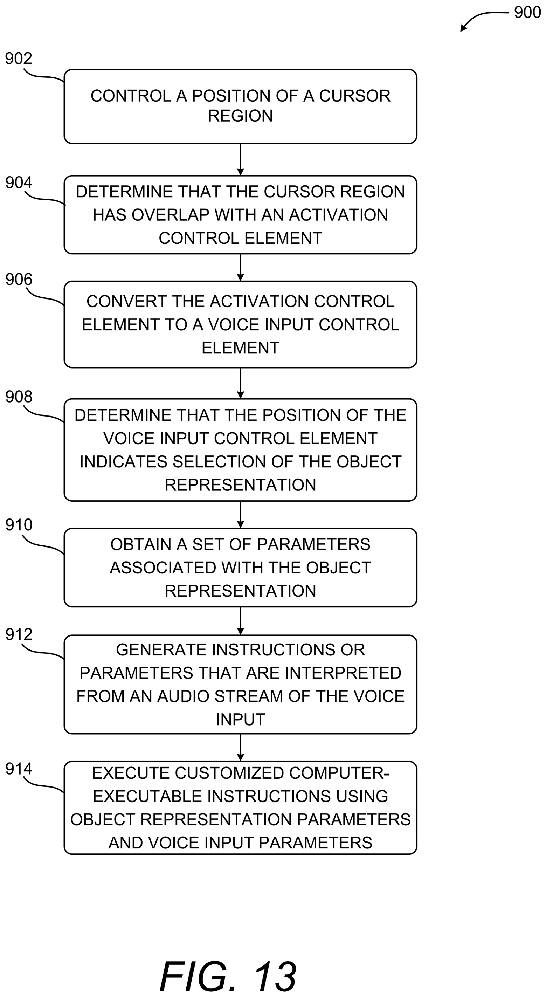

Turning now to FIGURE 13, aspects of a routine for implementing the disclosed techniques are shown and described below. It should be understood that the operations of the methods disclosed herein are not necessarily presented in any particular order and that performance of some or all of the operations in an alternative order(s) is possible and is contemplated. The operations have been presented in the demonstrated order for ease of description and illustration. Operations may be added, omitted, and/or performed simultaneously, without departing from the scope of the appended claims.

It also should be understood that the illustrated methods can end at any time and need not be performed in its entirety. Some or all operations of the methods, and/or substantially equivalent operations, can be performed by execution of computer-readable instructions included on a computer-storage media and computer-readable media, as defined herein. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the routine are described herein as being implemented, at least in part, by an application, component and/or circuit, such as a device module that can be included in any one of the memory components disclosed herein, including but not limited to RAM. In some configurations, the device module can be a dynamically linked library (DLL), a statically linked library, functionality enabled by an application programing interface (API), a compiled program, an interpreted program, a script or any other executable set of instructions. Data, such as input data or a signal from a sensor, received by the device module can be stored in a data structure in one or more memory components. The data can be retrieved from the data structure by addressing links or references to the data structure.

Although the following illustration refers to the components depicted in the present application, it can be appreciated that the operations of the routine may be also implemented in many other ways. For example, the routine may be implemented, at least in part, by a processor or circuit of another remote computer (which can be a server) or a local processor or circuit of a local computer (which can be a client device receiving a message or a client device sending the message).

Any aspect of the routine, which can include the generation of a voice input, communication of a voice input to an LLM can include any type of natural language processing (NLP) algorithm. In addition, one or more of the operations of the routine may alternatively or additionally be implemented, at least in part, by a chipset working alone or in conjunction with other software modules. Any service, circuit or application suitable for providing input data indicating the position or state of any device may be used in operations described herein.

With reference to FIGURE 19, a routine for coordinating a voice input and a physical input gesture to use the voice input for customized computer-executable instructions starts at operation 902. At operation 902, the system controls a position of a cursor region 102 within a user interface 101 to follow a position of a physical input gesture 103 provided by a user, the user interface 101 comprising a plurality of object representations 110 that are each associated with individual sets of parameters 111. This is shown in FIGURES 1A-1D where a UI includes an activation button and a cursor region, which can be displayed or invisible to the user. The UI also shows element representing specific objects, e.g., a meeting, a message, a message thread, file, etc. Each object is associated with parameters, e.g., email addresses, file names, file paths, etc.

At operation 904, the system monitors the position of the cursor region 102 to determine that the position of the cursor region 102 has a threshold overlap with an activation control element 104 for a predetermined time period. Then at operation 906, the system converts the activation control element to a voice input control element 105, in response to determining the position of the cursor region 102 has the threshold overlap with the activation control element for the predetermined time period. The system then controls a position of the voice input control element 105 based on the position of the physical input gesture 103. This is shown in FIGURES 2A-2D, where the system changes the button to a movable voice input button when the cursor region overlaps with the activation button.

Then, at operation 908, the system monitors the position of the voice input control element 105 to determine that the position of the voice input control element 105 has a threshold overlap with an object representation 110A, the threshold overlap indicating a selection of the object representation 110A from the plurality of object representations 110 displayed within the user interface 101. This is shown in FIGURES 3A-3E, where a user physical input gesture moves the voice input button to a UI element representing specific objects, e.g., a meeting, a message, a message thread, file, etc.

Then, at operation 910, in response to determining that the position of the voice input control element 105 has the threshold overlap with the object representation 110A and in response to the voice input, the system: obtains a set of parameters 111A associated with the object representation 110A. Also, in operation 912, in response to determining that the position of the voice input control element 105 has the threshold overlap with the object representation 110A and in response to the voice input the system generates instructions or parameters that are interpreted from an audio stream of the voice input 121. Then at operation 914, the system executes customized computer-executable instructions that are generated using a combination of the set of parameters 111A associated with the object representation 110A and the instructions or parameters that are interpreted from the audio stream of the voice input 121. This can include customized computer-executable instructions for generating emails or message to recipients named in a voice input.

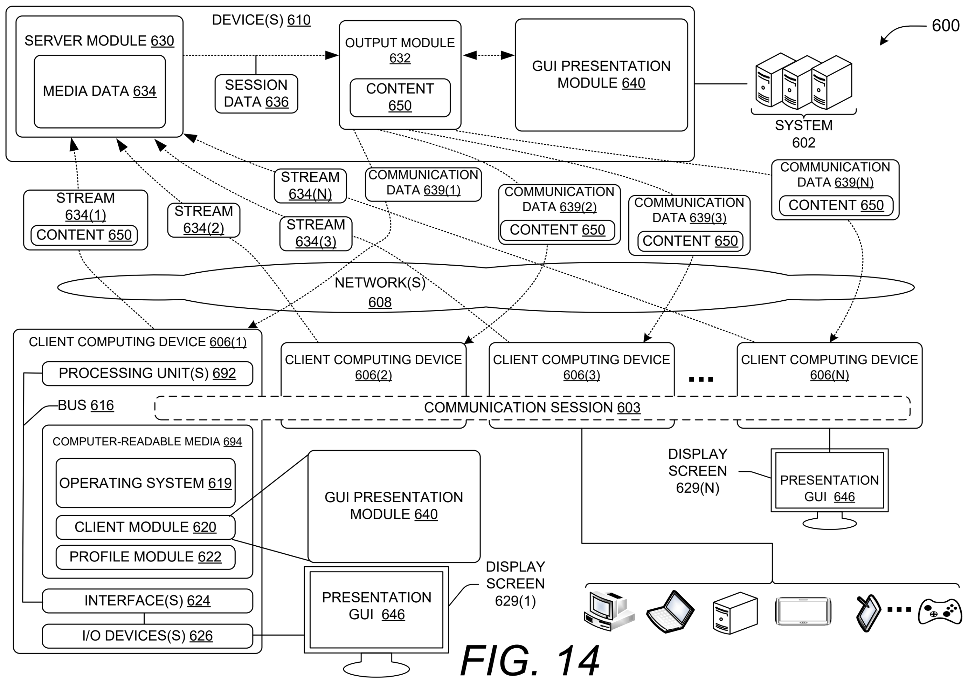

FIGURE 14 is a diagram illustrating an example environment 600 in which a system 602 can implement the techniques disclosed herein. It should be appreciated that the above-described subject matter may be implemented as a computer-controlled apparatus, a computer process, a computing system, or as an article of manufacture such as a computer-readable storage medium. The operations of the example methods are illustrated in individual blocks and summarized with reference to those blocks. The methods are illustrated as logical flows of blocks, each block of which can represent one or more operations that can be implemented in hardware, software, or a combination thereof. In the context of software, the operations represent computer-executable instructions stored on one or more computer-readable media that, when executed by one or more processors, enable the one or more processors to perform the recited operations.

Generally, computer-executable instructions include routines, programs, objects, modules, components, data structures, and the like that perform particular functions or implement particular abstract data types. The order in which the operations are described is not intended to be construed as a limitation, and any number of the described operations can be executed in any order, combined in any order, subdivided into multiple sub-operations, and/or executed in parallel to implement the described processes. The described processes can be performed by resources associated with one or more device(s) such as one or more internal or external CPUs or GPUs, and/or one or more pieces of hardware logic such as field-programmable gate arrays ("FPGAs"), digital signal processors ("DSPs"), or other types of accelerators.

All of the methods and processes described above may be embodied in, and fully automated via, software code modules executed by one or more general purpose computers or processors. The code modules may be stored in any type of computer-readable storage medium or other computer storage device, such as those described below. Some or all of the methods may alternatively be embodied in specialized computer hardware, such as that described below.

Any routine descriptions, elements or blocks in the flow diagrams described herein and/or depicted in the attached figures should be understood as potentially representing modules, segments, or portions of code that include one or more executable instructions for implementing specific logical functions or elements in the routine. Alternate implementations are included within the scope of the examples described herein in which elements or functions may be deleted, or executed out of order from that shown or discussed, including substantially synchronously or in reverse order, depending on the functionality involved as would be understood by those skilled in the art.

In some implementations, the system 602 may function to collect, analyze, and share data that is displayed to users of a communication session 604. As illustrated, the communication session 603 may be implemented between a number of client computing devices 606(1) through 606(N) (where N is a number having a value of two or greater) that are associated with or are part of the system 602. The client computing devices 606(1) through 606(N) enable users, also referred to as individuals, to participate in the communication session 603.

In this example, the communication session 603 is hosted, over one or more network(s) 608, by the system 602. That is, the system 602 can provide a service that enables users of the client computing devices 606(1) through 606(N) to participate in the communication session 603 (e.g., via a live viewing and/or a recorded viewing). Consequently, a "participant" to the communication session 603 can comprise a user and/or a client computing device (e.g., multiple users may be in a room participating in a communication session via the use of a single client computing device), each of which can communicate with other participants. As an alternative, the communication session 603 can be hosted by one of the client computing devices 606(1) through 606(N) utilizing peer-to-peer technologies. The system 602 can also host chat conversations and other team collaboration functionality (e.g., as part of an application suite).

In some implementations, such chat conversations and other team collaboration functionality are considered external communication sessions distinct from the communication session 603. A computing system 602 that collects participant data in the communication session 603 may be able to link to such external communication sessions. Therefore, the system may receive information, such as date, time, session particulars, and the like, that enables connectivity to such external communication sessions. In one example, a chat conversation can be conducted in accordance with the communication session 603. Additionally, the system 602 may host the communication session 603, which includes at least a plurality of participants co-located at a meeting location, such as a meeting room or auditorium, or located in disparate locations.

In examples described herein, client computing devices 606(1) through 606(N) participating in the communication session 603 are configured to receive and render for display, on a user interface of a display screen, communication data. The communication data can comprise a collection of various instances, or streams, of live content and/or recorded content. The collection of various instances, or streams, of live content and/or recorded content may be provided by one or more cameras, such as video cameras. For example, an individual stream of live or recorded content can comprise media data associated with a video feed provided by a video camera (e.g., audio and visual data that capture the appearance and speech of a user participating in the communication session). In some implementations, the video feeds can be communicated with the messages.

The system 602 of FIGURE 14 includes device(s) 610. The device(s) 610 and/or other components of the system 602 can include distributed computing resources that communicate with one another and/or with the client computing devices 606(1) through 606(N) via the one or more network(s) 608. In some examples, the system 602 may be an independent system that is tasked with managing aspects of one or more communication sessions such as communication session 603. As an example, the system 602 may be managed by entities such as SLACK, WEBEX,

### GOTOMEETING, GOOGLE HANGOUTS, etc.

Network(s) 608 may include, for example, public networks such as the Internet, private networks such as an institutional and/or personal intranet, or some combination of private and public networks. Network(s) 608 may also include any type of wired and/or wireless network, including but not limited to local area networks ("LANs"), wide area networks ("WANs"), satellite networks, cable networks, Wi-Fi networks, WiMax networks, mobile communications networks (e.g., 3G, 4G, and so forth) or any combination thereof. Network(s) 608 may utilize communications protocols, including packet-based and/or datagram-based protocols such as Internet protocol ("IP"), transmission control protocol ("TCP"), user datagram protocol ("UDP"), or other types of protocols. Moreover, network(s) 608 may also include a number of devices that facilitate network communications and/or form a hardware basis for the networks, such as switches, routers, gateways, access points, firewalls, base stations, repeaters, backbone devices, and the like.

In some examples, network(s) 608 may further include devices that enable connection to a wireless network, such as a wireless access point ("WAP"). Examples support connectivity through WAPs that send and receive data over various electromagnetic frequencies (e.g., radio frequencies), including WAPs that support Institute of Electrical and Electronics Engineers ("IEEE") 802.11 standards (e.g., 802.11g, 802.11n, 802.11ac and so forth), and other standards.

In various examples, device(s) 610 may include one or more computing devices that operate in a cluster or other grouped configuration to share resources, balance load, increase performance, provide fail-over support or redundancy, or for other purposes. For instance, device(s) 610 may belong to a variety of classes of devices such as traditional server-type devices, desktop computer-type devices, and/or mobile-type devices. Thus, although illustrated as a single type of device or a server-type device, device(s) 610 may include a diverse variety of device types and are not limited to a particular type of device. Device(s) 610 may represent, but are not limited to, server computers, desktop computers, web-server computers, personal computers, mobile computers, laptop computers, tablet computers, or any other sort of computing device.

A client computing device (e.g., one of client computing device(s) 606(1) through 606(N)) (each of which are also referred to herein as a "data processing system") may belong to a variety of classes of devices, which may be the same as, or different from, device(s) 610, such as traditional client-type devices, desktop computer-type devices, mobile-type devices, special purpose-type devices, embedded-type devices, and/or wearable-type devices. Thus, a client computing device can include, but is not limited to, a desktop computer, a game console and/or a gaming device, a tablet computer, a personal data assistant ("PDA"), a mobile phone/tablet hybrid, a laptop computer, a telecommunication device, a computer navigation type client computing device such as a satellite-based navigation system including a global positioning system ("GPS") device, a wearable device, a virtual reality ("VR") device, an augmented reality ("AR") device, an implanted computing device, an automotive computer, a network-enabled television, a thin client, a terminal, an Internet of Things ("IoT") device, a work station, a media player, a personal video recorder ("PVR"), a set-top box, a camera, an integrated component (e.g., a peripheral device) for inclusion in a computing device, an appliance, or any other sort of computing device. Moreover, the client computing device may include a combination of the earlier listed examples of the client computing device such as, for example, desktop computer-type devices or a mobile-type device in combination with a wearable device, etc.

Client computing device(s) 606(1) through 606(N) of the various classes and device types can represent any type of computing device having one or more data processing unit(s) 692 operably connected to computer-readable media 694 such as via a bus 616, which in some instances can include one or more of a system bus, a data bus, an address bus, a PCI bus, a Mini-PCI bus, and any variety of local, peripheral, and/or independent buses. Executable instructions stored on computer-readable media 694 may include, for example, an operating system 619, a client module 620, a profile module 622, and other modules, programs, or applications that are loadable and executable by data processing units(s) 692.

Client computing device(s) 606(1) through 606(N) may also include one or more interface(s) 624 to enable communications between client computing device(s) 606(1) through 606(N) and other networked devices, such as device(s) 610, over network(s) 608. Such network interface(s) 624 may include one or more network interface controllers (NICs) or other types of transceiver devices to send and receive communications and/or data over a network. Moreover, client computing device(s) 606(1) through 606(N) can include input/output ("I/O") interfaces (devices) 626 that enable communications with input/output devices such as user input devices including peripheral input devices (e.g., a game controller, a keyboard, a mouse, a pen, a voice input device such as a microphone, a video camera for obtaining and providing video feeds and/or still images, a touch input device, a gestural input device, and the like) and/or output devices including peripheral output devices (e.g., a display, a printer, audio speakers, a haptic output device, and the like). FIGURE 14 illustrates that client computing device 606(1) is in some way connected to a display device (e.g., a display screen 629(N)), which can display a UI according to the techniques described herein.

In the example environment 600 of FIGURE 14, client computing devices 606(1) through 606(N) may use their respective client modules 620 to connect with one another and/or other external device(s) in order to participate in the communication session 603, or in order to contribute activity to a collaboration environment. For instance, a first user may utilize a client computing device 606(1) to communicate with a second user of another client computing device 606(2). When executing client modules 620, the users may share data, which may cause the client computing device 606(1) to connect to the system 602 and/or the other client computing devices 606(2) through 606(N) over the network(s) 608.

The client computing device(s) 606(1) through 606(N) may use their respective profile modules 622 to generate participant profiles (not shown in FIGURE 14) and provide the participant profiles to other client computing devices and/or to the device(s) 610 of the system 602. A participant profile may include one or more of an identity of a user or a group of users (e.g., a name, a unique identifier ("ID"), etc.), user data such as personal data, machine data such as location (e.g., an IP address, a room in a building, etc.) and technical capabilities, etc. Participant profiles may be utilized to register participants for communication sessions.

As shown in FIGURE 14, the device(s) 610 of the system 602 include a server module 630 and an output module 632. In this example, the server module 630 is configured to receive, from individual client computing devices such as client computing devices 606(1) through 606(N), media streams 634(1) through 634(N). As described above, media streams can comprise a video feed (e.g., audio and visual data associated with a user), audio data which is to be output with a presentation of an avatar of a user (e.g., an audio only experience in which video data of the user is not transmitted), text data (e.g., text messages), file data and/or screen sharing data (e.g., a document, a slide deck, an image, a video displayed on a display screen, etc.), and so forth. Thus, the server module 630 is configured to receive a collection of various media streams 634(1) through 634(N) during a live viewing of the communication session 603 (the collection being referred to herein as "media data 634"). In some scenarios, not all of the client computing devices that participate in the communication session 603 provide a media stream. For example, a client computing device may only be a consuming, or a "listening", device such that it only receives content associated with the communication session 603 but does not provide any content to the communication session 603. The server module 630 can function as the communication system manager 101 that manages access to the threads, meeting object and the data structures, as described herein.

In various examples, the server module 630 can select aspects of the media streams 634 that are to be shared with individual ones of the participating client computing devices 606(1) through 606(N). Consequently, the server module 630 may be configured to generate session data 636 based on the streams 634 and/or pass the session data 636 to the output module 632. Then, the output module 632 may communicate communication data 639 to the client computing devices (e.g., client computing devices 606(1) through 606(3) participating in a live viewing of the communication session). The communication data 639 may include video, audio, and/or other content data, provided by the output module 632 based on content 650 associated with the output module 632 and based on received session data 636. The content 650 can include the streams 634 or other shared data, such as an image file, a spreadsheet file, a slide deck, a document, etc. The streams 634 can include a video component depicting images captured by an I/O device 626 on each client computer. The content 650 also include input data from each user, which can be used to control a display of a message thread or contain content for communicating messages with a thread. The content can also include instructions for sharing data and identifiers for recipients of the shared data. Thus, the content 650 is also referred to herein as input data 650 or an input 650.

As shown, the output module 632 transmits communication data 639(1) to client computing device 606(1), and transmits communication data 639(2) to client computing device 606(2), and transmits communication data 639(3) to client computing device 606(3), etc. The communication data 639 transmitted to the client computing devices can be the same or can be different (e.g., positioning of streams of content within a user interface may vary from one device to the next).

In various implementations, the device(s) 610 and/or the client module 620 can include GUI presentation module 640. The GUI presentation module 640 may be configured to analyze communication data 639 that is for delivery to one or more of the client computing devices 606. Specifically, the UI presentation module 640, at the device(s) 610 and/or the client computing device 606, may analyze communication data 639 to determine an appropriate manner for displaying video, image, and/or content on the display screen 629 of an associated client computing device 606. In some implementations, the GUI presentation module 640 may provide video, image, and/or content to a presentation GUI 646 rendered on the display screen 629 of the associated client computing device 606. The presentation GUI 646 may be caused to be rendered on the display screen 629 by the GUI presentation module 640. The presentation GUI 646 may include the video, image, and/or content analyzed by the GUI presentation module 640.

In some implementations, the presentation GUI 646 may include a plurality of sections or grids that may render or comprise video, image, and/or content for display on the display screen 629. For example, a first section of the presentation GUI 646 may include a video feed of a presenter or individual, a second section of the presentation GUI 646 may include a video feed of an individual consuming meeting information provided by the presenter or individual. The GUI presentation module 640 may populate the first and second sections of the presentation GUI 646 in a manner that properly imitates an environment experience that the presenter and the individual may be sharing.

In some implementations, the GUI presentation module 640 may enlarge or provide a zoomed view of the individual represented by the video feed in order to highlight a reaction, such as a facial feature, the individual had to the presenter. In some implementations, the presentation GUI 646 may include a video feed of a plurality of participants associated with a meeting, such as a general communication session. In other implementations, the presentation GUI 646 may be associated with a channel, such as a chat channel, enterprise Teams channel, or the like. Therefore, the presentation GUI 646 may be associated with an external communication session that is different from the general communication session.

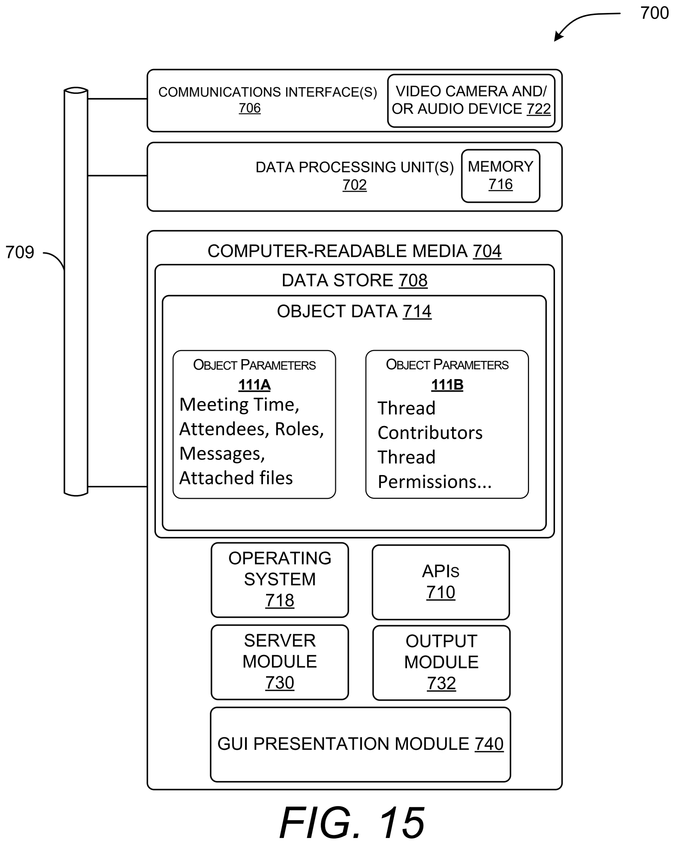

FIGURE 15 illustrates a diagram that shows example components of an example device 700 (also referred to herein as a "computing device") configured to generate data for some of the user interfaces disclosed herein. The device 700 may generate data that may include one or more sections that may render or comprise video, images, virtual objects, and/or content for display on the display screen 629. The device 700 may represent one of the device(s) described herein. Additionally, or alternatively, the device 700 may represent one of the client computing devices 606.

As illustrated, the device 700 includes one or more data processing unit(s) 702, computer-readable media 704, and communication interface(s) 706. The components of the device 700 are operatively connected, for example, via a bus 709, which may include one or more of a system bus, a data bus, an address bus, a PCI bus, a Mini-PCI bus, and any variety of local, peripheral, and/or independent buses.

As utilized herein, data processing unit(s), such as the data processing unit(s) 702 and/or data processing unit(s) 692, may represent, for example, a CPU-type data processing unit, a GPU-type data processing unit, a field-programmable gate array ("FPGA"), another class of DSP, or other hardware logic components that may, in some instances, be driven by a CPU. For example, and without limitation, illustrative types of hardware logic components that may be utilized include Application-Specific Integrated Circuits ("ASICs"), Application-Specific Standard Products ("ASSPs"), System-on-a-Chip Systems ("SOCs"), Complex Programmable Logic Devices ("CPLDs"), etc.

As utilized herein, computer-readable media, such as computer-readable media 704 and computer-readable media 694, may store instructions executable by the data processing unit(s). The computer-readable media may also store instructions executable by external data processing units such as by an external CPU, an external GPU, and/or executable by an external accelerator, such as an FPGA type accelerator, a DSP type accelerator, or any other internal or external accelerator. In various examples, at least one CPU, GPU, and/or accelerator is incorporated in a computing device, while in some examples one or more of a CPU, GPU, and/or accelerator is external to a computing device.

Computer-readable media, which might also be referred to herein as a computer-readable medium, may include computer storage media and/or communication media. Computer storage media may include one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including but not limited to random access memory ("RAM"), static random-access memory ("SRAM"), dynamic random-access memory ("DRAM"), phase change memory ("PCM"), read-only memory ("ROM"), erasable programmable read-only memory ("EPROM"), electrically erasable programmable read-only memory ("EEPROM"), flash memory, compact disc read-only memory ("CD-ROM"), digital versatile disks ("DVDs"), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device. The computer storage media can also be referred to herein as computer-readable storage media, non-transitory computer-readable storage media, non-transitory computer-readable medium, computer-readable storage medium, computer-readable storage device, or computer storage medium.

In contrast to computer storage media, communication media may embody computer-readable instructions, data structures, program modules, or other data in a modulated data signal, such as a carrier wave, or other transmission mechanism. As defined herein, computer storage media does not include communication media. That is, computer storage media does not include communications media consisting solely of a modulated data signal, a carrier wave, or a propagated signal, per se.

Communication interface(s) 706 may represent, for example, network interface controllers ("NICs") or other types of transceiver devices to send and receive communications over a network. Furthermore, the communication interface(s) 706 may include one or more video cameras and/or audio devices 722 to enable generation of video feeds and/or still images, and so forth.

In the illustrated example, computer-readable media 704 includes a data store 708. In some examples, the data store 708 includes data storage such as a database, data warehouse, or other type of structured or unstructured data storage. In some examples, the data store 708 includes a corpus and/or a relational database with one or more tables, indices, stored procedures, and so forth to enable data access including one or more of hypertext markup language ("HTML") tables, resource description framework ("RDF") tables, web ontology language ("OWL") tables, and/or extensible markup language ("XML") tables, for example.

The data store 708 may store data for the operations of processes, applications, components, and/or modules stored in computer-readable media 704 and/or executed by data processing unit(s) 702 and/or accelerator(s). For instance, in some examples, the data store 708 may store session data 710 (e.g., session data 636 as shown in FIGURE 14), profile data (e.g., associated with a participant profile), and/or other data. The session data 710 can include a total number of participants (e.g., users and/or client computing devices) in a communication session, activity that occurs in the communication session, a list of invitees to the communication session, and/or other data related to when and how the communication session is conducted or hosted. The data store 708 may also include object data 714, such as the content of an email thread, a message thread or files. This data can also include parameters for each object.

Alternately, some or all of the above-referenced data can be stored on separate memories 716 on board one or more data processing unit(s) 702 such as a memory on board a CPU-type processor, a GPU-type processor, an FPGA-type accelerator, a DSP-type accelerator, and/or another accelerator. In this example, the computer-readable media 704 also includes an operating system 718 and application programming interface(s) 710 (APIs) configured to expose the functionality and the data of the device 700 to other devices. Additionally, the computer-readable media 704 includes one or more modules such as the server module 730, the output module 732, and the GUI presentation module 740, although the number of illustrated modules is just an example, and the number may vary. That is, functionality described herein in association with the illustrated modules may be performed by a fewer number of modules or a larger number of modules on one device or spread across multiple devices.

The disclosure presented herein also encompasses the subject matter set forth in the following clauses.

Example Clause A1. A method for coordinating a voice input and a physical input gesture to use the voice input for customized computer-executable instructions, the method executing on a system, the method comprising: monitoring a position of a voice input control element to determine that the position of the voice input control element has a threshold overlap with an object representation, the threshold overlap indicating a selection of the object representation from the plurality of object representations displayed within the user interface; in response to determining that the position of the voice input control element has the threshold overlap with the object representation: obtaining a set of parameters associated with the object representation, generating instructions or parameters that are interpreted from an audio stream of the voice input, and executing the customized computer-executable instructions using a combination of the set of parameters associated with the object representation and the instructions or parameters that are interpreted from the audio stream of the voice input.

Example Clause A2. The method of clause A1, wherein the object representation is associated with a calendar object storing parameters that include identities of invitees, a meeting start time, and a meeting end time, wherein the parameters that are interpreted from the audio stream of the voice input include an identity of a recipient, wherein the instructions that are interpreted from the audio stream of the voice input cause the customized computer-executable instructions to generate and send an email directed to the identity of the recipient, the email including a copy of the calendar object inviting the recipient to a meeting.

Example Clause A3. The method of clause A1, wherein the object representation is associated with a calendar object storing parameters that include identities of invitees, a meeting start time, a meeting end time, and an attachment, wherein the parameters that are interpreted from the audio stream of the voice input include an identity of a recipient, wherein the instructions that are interpreted from the audio stream of the voice input cause the customized computer-executable instructions to generate and send an email directed to the identity of the recipient, the email including a copy of the attachment.

Example Clause A4. The method of clause A1, wherein the object representation is associated with an email object storing parameters that include identities of a sender and recipients of a first email, the email object further storing an attachment, wherein the parameters that are interpreted from the audio stream of the voice input include an identity of a recipient, wherein the instructions that are interpreted from the audio stream of the voice input cause the customized computer-executable instructions to generate and send a second email directed to the identity of the recipient, the email including a copy of the attachment.

Example Clause A5. The method of clause A1, wherein the object representation is associated with an email object storing parameters that include identities of a sender and recipients of an email, wherein the parameters that are interpreted from the audio stream of the voice input include an identity of a recipient, wherein the instructions that are interpreted from the audio stream of the voice input cause the customized computer-executable instructions to send the email to the recipient as a forwarded email or a reply email with content that is interpreted from the audio stream of the voice input.

Example Clause A6. The method of clause A1, wherein the object representation is associated with a message thread object storing parameters that include identities of participants of a message thread, wherein the parameters that are interpreted from the audio stream of the voice input include content of a new message to add to the message thread, wherein the instructions that are interpreted from the audio stream of the voice input cause the customized computer-executable instructions to generate and send the new message with the content to the message thread.

Example Clause A7. The method of clause A1, wherein the object representation is associated with a message thread object storing parameters that include identities of participants of a message thread, wherein the parameters that are interpreted from the audio stream of the voice input include content of a new message to add to the message thread, wherein the instructions that are interpreted from the audio stream of the voice input cause the customized computer-executable instructions to generate and send the new message with the content to the message thread, and wherein the method further comprises: continue monitoring the position of the voice input control element to determine that the position of the voice input control element indicates a selection of a second object representation is associated with an operating system function; in response to determining that the position of the voice input control element indicates the selection of the second object representation: obtaining a set of functions associated with the second object representation, generating other instructions or other parameters that are interpreted from the audio stream of the voice input, and executing a second set of customized computer-executable instructions using a combination of the set of functions associated with the second object representation and the other instructions or the other parameters that are interpreted from the audio stream of the voice input.

Example Clause B1. A computing system for coordinating a voice input and a physical input gesture to use the voice input for customized computer-executable instructions, the computing system comprising: one or more processing units; and a computer-readable storage medium having encoded thereon computer-executable instructions to cause the one or more processing units to: control a position of a cursor within a user interface to follow a position of a physical input gesture provided by an input device, the user interface comprising a plurality of object representations that are each associated with individual sets of parameters; monitor the position of the cursor to determine that the position of the cursor indicates a selection of the object representation from the plurality of object representations displayed within the user interface; in response to determining that the position of the voice input control element selection of the object representation: obtain a set of parameters associated with the object representation, generating instructions or parameters that are interpreted from an audio stream of the voice input, and execute the customized computer-executable instructions using a combination of the set of parameters associated with the object representation and the instructions or parameters that are interpreted from the audio stream of the voice input.

Example Clause B2. The computing system of clause B1, wherein the object representation is associated with a calendar object storing parameters that include identities of invitees, a meeting start time, and a meeting end time, wherein the parameters that are interpreted from the audio stream of the voice input include an identity of a recipient, wherein the instructions that are interpreted from the audio stream of the voice input cause the customized computer-executable instructions to generate and send an email directed to the identity of the recipient, the email including a copy of the calendar object inviting the recipient to a meeting.

Example Clause B3. The computing system of clause B1, wherein the object representation is associated with a calendar object storing parameters that include identities of invitees, a meeting start time, a meeting end time, and an attachment, wherein the parameters that are interpreted from the audio stream of the voice input include an identity of a recipient, wherein the instructions that are interpreted from the audio stream of the voice input cause the customized computer-executable instructions to generate and send an email directed to the identity of the recipient, the email including a copy of the attachment.

Example Clause B4. The computing system of clause B1, wherein the object representation is associated with an email object storing parameters that include identities of a sender and recipients of a first email, the email object further storing an attachment, wherein the parameters that are interpreted from the audio stream of the voice input include an identity of a recipient, wherein the instructions that are interpreted from the audio stream of the voice input cause the customized computer-executable instructions to generate and send a second email directed to the identity of the recipient, the email including a copy of the attachment.

Example Clause B5. The computing system of clause B1, wherein the object representation is associated with an email object storing parameters that include identities of a sender and recipients of an email, wherein the parameters that are interpreted from the audio stream of the voice input include an identity of a recipient, wherein the instructions that are interpreted from the audio stream of the voice input cause the customized computer-executable instructions to send the email to the recipient as a forwarded email or a reply email with content that is interpreted from the audio stream of the voice input.

Example Clause B6. The computing system of clause B1, wherein the object representation is associated with a message thread object storing parameters that include identities of participants of a message thread, wherein the parameters that are interpreted from the audio stream of the voice input include content of a new message to add to the message thread, wherein the instructions that are interpreted from the audio stream of the voice input cause the customized computer-executable instructions to generate and send the new message with the content to the message thread.

Example Clause B7. The computing system of clause B1, wherein the object representation is associated with an operating system function, wherein the parameters that are interpreted from the audio stream of the voice input include instructions for performing the operating system function, wherein the set of customized computer-executable instructions uses instructions for performing the operating system function to control an operating system of the computing system.

Example Clause C1. A computer-readable storage medium having encoded thereon computer-executable instructions for coordinating a voice input and a physical input gesture to use the voice input for customized computer-executable instructions, the computer-executable instructions configured to cause one or more processing units of a computing system to: control a position of a cursor within a user interface to follow a position of a physical input gesture provided by an input device, the user interface comprising a plurality of object representations that are each associated with individual sets of parameters; monitor the position of the cursor to determine that the position of the cursor indicates a selection of the object representation from the plurality of object representations displayed within the user interface; in response to determining that the position of the voice input control element selection of the object representation: obtain a set of parameters associated with the object representation, generating instructions or parameters that are interpreted from an audio stream of the voice input, and execute the customized computer-executable instructions using a combination of the set of parameters associated with the object representation and the instructions or parameters that are interpreted from the audio stream of the voice input.

Example Clause C2. The computer-readable storage medium of clause C1, wherein the object representation is associated with a calendar object storing parameters that include identities of invitees, a meeting start time, and a meeting end time, wherein the parameters that are interpreted from the audio stream of the voice input include an identity of a recipient, wherein the instructions that are interpreted from the audio stream of the voice input cause the customized computer-executable instructions to generate and send an email directed to the identity of the recipient, the email including a copy of the calendar object inviting the recipient to a meeting.

Example Clause C3. The computer-readable storage medium of clause C1, wherein the object representation is associated with a calendar object storing parameters that include identities of invitees, a meeting start time, a meeting end time, and an attachment, wherein the parameters that are interpreted from the audio stream of the voice input include an identity of a recipient, wherein the instructions that are interpreted from the audio stream of the voice input cause the customized computer-executable instructions to generate and send an email directed to the identity of the recipient, the email including a copy of the attachment.

Example Clause C4. The computer-readable storage medium of clause C1, wherein the object representation is associated with an email object storing parameters that include identities of a sender and recipients of a first email, the email object further storing an attachment, wherein the parameters that are interpreted from the audio stream of the voice input include an identity of a recipient, wherein the instructions that are interpreted from the audio stream of the voice input cause the customized computer-executable instructions to generate and send a second email directed to the identity of the recipient, the email including a copy of the attachment.

Example Clause C5. The computer-readable storage medium of clause C1, wherein the object representation is associated with an email object storing parameters that include identities of a sender and recipients of an email, wherein the parameters that are interpreted from the audio stream of the voice input include an identity of a recipient, wherein the instructions that are interpreted from the audio stream of the voice input cause the customized computer-executable instructions to send the email to the recipient as a forwarded email or a reply email with content that is interpreted from the audio stream of the voice input.

Example Clause C6. The computer-readable storage medium of clause C1, wherein the object representation is associated with a message thread object storing parameters that include identities of participants of a message thread, wherein the parameters that are interpreted from the audio stream of the voice input include content of a new message to add to the message thread, wherein the instructions that are interpreted from the audio stream of the voice input cause the customized computer-executable instructions to generate and send the new message with the content to the message thread.

Example Clause D1. The disclosed techniques provide a dynamic microphone pointer interface for generating contextual voice commands. A system provides an input that combines a voice input and a physical input gesture. In some embodiments, a system displays a UI with a movable microphone icon. The microphone icon can be moved by the physical input gesture to a region associated with a specific data object, such as a meeting, email, or file. While the microphone icon is indicating the selection of the region, the system can combine the voice input with that data object to complete tasks. This combination provides a technical improvement over a system that only receives a user's voice command by deriving context from the physical input gesture and combining that context with the user's voice command. This provides accurate and efficient input method that mitigates the need for repeated attempts to have a computer execute desired functions.

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method for coordinating a voice input and a physical input gesture to use the voice input for customized computer-executable instructions, the method executing on a system (100), the method comprising:
monitoring a position of a voice input control element (105) to determine that the position of the voice input control element has a threshold overlap with an object representation (110A), the threshold overlap indicating a selection of the object representation from the plurality of object representations displayed within the user interface (101);
in response to determining that the position of the voice input control element has the threshold overlap with the object representation:
obtaining a set of parameters (111A) associated with the object representation,
generating instructions or parameters that are interpreted from an audio stream of the voice input (121), and
executing the customized computer-executable instructions using a combination of the set of parameters associated with the object representation and the instructions or parameters that are interpreted from the audio stream of the voice input.

2. The method of claim 1, wherein the object representation (110) is associated with a calendar object storing parameters that include identities of invitees, a meeting start time, and a meeting end time, wherein the parameters that are interpreted from the audio stream of the voice input include an identity of a recipient, wherein the instructions that are interpreted from the audio stream of the voice input cause the customized computer-executable instructions to generate and send an email directed to the identity of the recipient, the email including a copy of the calendar object inviting the recipient to a meeting.

3. The method of claim 1, wherein the object representation (110) is associated with a calendar object storing parameters that include identities of invitees, a meeting start time, a meeting end time, and an attachment, wherein the parameters that are interpreted from the audio stream of the voice input include an identity of a recipient, wherein the instructions that are interpreted from the audio stream of the voice input cause the customized computer-executable instructions to generate and send an email directed to the identity of the recipient, the email including a copy of the attachment.

4. The method of claim 1, wherein the object representation (110) is associated with an email object storing parameters that include identities of a sender and recipients of a first email, the email object further storing an attachment, wherein the parameters that are interpreted from the audio stream of the voice input include an identity of a recipient, wherein the instructions that are interpreted from the audio stream of the voice input cause the customized computer-executable instructions to generate and send a second email directed to the identity of the recipient, the email including a copy of the attachment.

5. The method of claim 1, wherein the object representation (110) is associated with an email object storing parameters that include identities of a sender and recipients of an email, wherein the parameters that are interpreted from the audio stream of the voice input include an identity of a recipient, wherein the instructions that are interpreted from the audio stream of the voice input cause the customized computer-executable instructions to send the email to the recipient as a forwarded email or a reply email with content that is interpreted from the audio stream of the voice input.

6. The method of claim 1, wherein the object representation (110) is associated with a message thread object storing parameters that include identities of participants of a message thread, wherein the parameters that are interpreted from the audio stream of the voice input include content of a new message to add to the message thread, wherein the instructions that are interpreted from the audio stream of the voice input cause the customized computer-executable instructions to generate and send the new message with the content to the message thread.

7. The method of claim 1, wherein the object representation (110) is associated with a message thread object storing parameters that include identities of participants of a message thread, wherein the parameters that are interpreted from the audio stream of the voice input include content of a new message to add to the message thread, wherein the instructions that are interpreted from the audio stream of the voice input cause the customized computer-executable instructions to generate and send the new message with the content to the message thread, and wherein the method further comprises:
continue monitoring the position of the voice input control element (105) to determine that the position of the voice input control element indicates a selection of a second object representation (110B) is associated with an operating system function;
in response to determining that the position of the voice input control element indicates the selection of the second object representation:
obtaining a set of functions associated with the second object representation,
generating other instructions or other parameters that are interpreted from the audio stream of the voice input (121), and
executing a second set of customized computer-executable instructions using a combination of the set of functions associated with the second object representation and the other instructions or the other parameters that are interpreted from the audio stream of the voice input.

8. A computing system (700) for coordinating a voice input and a physical input gesture to use the voice input for customized computer-executable instructions, the computing system (700) comprising:
one or more processing units (702); and
a computer-readable storage medium (704) having encoded thereon computer-executable instructions to cause the one or more processing units to:
control a position of a cursor within a user interface (101) to follow a position of a physical input gesture provided by an input device (626), the user interface (101) comprising a plurality of object representations (110) that are each associated with individual sets of parameters (111);
monitor the position of the cursor to determine that the position of the cursor indicates a selection of the object representation from the plurality of object representations displayed within the user interface;
in response to determining that the position of the voice input control element (105) selection of the object representation:
obtain a set of parameters associated with the object representation,
generating instructions or parameters that are interpreted from an audio stream of the voice input (121), and
execute the customized computer-executable instructions using a combination of the set of parameters associated with the object representation and the instructions or parameters that are interpreted from the audio stream of the voice input (121).

9. The computing system of claim 8, wherein the object representation (110) is:
associated with a calendar object storing parameters that include identities of invitees, a meeting start time, and a meeting end time, wherein the parameters that are interpreted from the audio stream of the voice input include an identity of a recipient, wherein the instructions that are interpreted from the audio stream of the voice input cause the customized computer-executable instructions to generate and send an email directed to the identity of the recipient, the email including a copy of the calendar object inviting the recipient to a meeting.

10. The computing system of claim 8, wherein the object representation (110) is associated with a calendar object storing parameters that include identities of invitees, a meeting start time, a meeting end time, and an attachment, wherein the parameters that are interpreted from the audio stream of the voice input include an identity of a recipient, wherein the instructions that are interpreted from the audio stream of the voice input cause the customized computer-executable instructions to generate and send an email directed to the identity of the recipient, the email including a copy of the attachment.

11. The computing system of claim 8, wherein the object representation (110) is associated with an email object storing parameters that include identities of a sender and recipients of a first email, the email object further storing an attachment, wherein the parameters that are interpreted from the audio stream of the voice input include an identity of a recipient, wherein the instructions that are interpreted from the audio stream of the voice input cause the customized computer-executable instructions to generate and send a second email directed to the identity of the recipient, the email including a copy of the attachment.

12. The computing system of claim 8, wherein the object representation (110) is associated with an email object storing parameters that include identities of a sender and recipients of an email, wherein the parameters that are interpreted from the audio stream of the voice input include an identity of a recipient, wherein the instructions that are interpreted from the audio stream of the voice input cause the customized computer-executable instructions to send the email to the recipient as a forwarded email or a reply email with content that is interpreted from the audio stream of the voice input.

13. The computing system of claim 8, wherein the object representation (110) is associated with a message thread object storing parameters that include identities of participants of a message thread, wherein the parameters that are interpreted from the audio stream of the voice input include content of a new message to add to the message thread, wherein the instructions that are interpreted from the audio stream of the voice input cause the customized computer-executable instructions to generate and send the new message with the content to the message thread.

14. The computing system of claim 8, wherein the object representation (110) is associated with an operating system function, wherein the parameters that are interpreted from the audio stream of the voice input include instructions for performing the operating system function, wherein the set of customized computer-executable instructions uses instructions for performing the operating system function to control an operating system of the computing system.

15. A computer-readable storage medium (704) having encoded thereon computer-executable instructions for coordinating a voice input and a physical input gesture to use the voice input for customized computer-executable instructions, the computer-executable instructions configured to cause one or more processing units (702) of a computing system (700) to:
control a position of a cursor within a user interface (101) to follow a position of a physical input gesture provided by an input device (626), the user interface comprising a plurality of object representations (110) that are each associated with individual sets of parameters (111);
monitor the position of the cursor to determine that the position of the cursor indicates a selection of the object representation from the plurality of object representations displayed within the user interface;
in response to determining that the position of the voice input control element (105) selection of the object representation:
obtain a set of parameters associated with the object representation,
generating instructions or parameters that are interpreted from an audio stream of the voice input (121), and
execute the customized computer-executable instructions using a combination of the set of parameters associated with the object representation and the instructions or parameters that are interpreted from the audio stream of the voice input.
